# EUROPEAN PATENT APPLICATION

(11) **EP 4 451 731 A1**
(43) Date of publication of application: **23.10.2024**
(21) Application number: 22906500.8
(22) Date of filing: 12.12.2022
(51) Int. Cl.: H04W 24/10, H04L 43/022

(54) **SENSING METHOD AND APPARATUS, AND COMMUNICATION DEVICE**

(30) Priority: 16.12.2021 CN 202111547553
(71) Applicant: VIVO MOBILE COMMUNICATION CO., LTD., Dongguan, Guangdong 523863 (CN)
(72) Inventor: YAO, Jian, Dongguan, Guangdong 523863 (CN); JIANG, Dajie, Dongguan, Guangdong 523863 (CN); YUAN, Yannan, Dongguan, Guangdong 523863 (CN); DING, Shengli, Dongguan, Guangdong 523863 (CN); LI, Jianzhi, Dongguan, Guangdong 523863 (CN); REN, Qianyao, Dongguan, Guangdong 523863 (CN)
(74) Representative: Lavoix
(86) International application number: PCT/CN2022/138389
(87) International publication number: WO 2023/109755

(57) **Abstract**

This application relates to the field of communication technologies, and discloses a sensing method and apparatus and a communication device. The sensing method in embodiments of this application includes: A first device preprocesses a first sensing measurement result to obtain a second sensing measurement result. The first sensing measurement result is a sensing measurement result corresponding to a sensing measurement quantity obtained by the first device based on a received first signal. The first device reports the second sensing measurement result to a second device.

## Description

### CROSS-REFERENCE TO RELATED APPLICATIONS

This application claims priority to Chinese Patent Application No.202111547553.5 filed on December 16, 2021, which is incorporated herein by reference in its entirety.

### TECHNICAL FIELD

This application relates to the field of communication technologies, and specifically, to a sensing method and apparatus, and a communication device.

### BACKGROUND

A processing process of data received by a communication system is relatively fixed. However, in a scenario in which a sensing function is introduced into the communication system or in an integrated sensing and communication scenario, since various sensing services exist, significant differences may exist in processing processes of data received by different sensing services, and different requirements are imposed for sensing measurement results. The sensing measurement results obtained by the sensing devices through sensing measurement may not meet the corresponding requirements.

### SUMMARY

Embodiments of this application provide a sensing method and apparatus, and a communication device, to resolve a problem regarding how to obtain a sensing measurement result that meets requirements.

A first aspect provides a sensing method, including:
A first device preprocesses a first sensing measurement result to obtain a second sensing measurement result. The first sensing measurement result is a sensing measurement result corresponding to a sensing measurement quantity obtained by the first device based on a received first signal.

The first device reports the second sensing measurement result to a second device.

A third aspect provides a sensing method, including:
A second device obtains a second sensing measurement result transmitted by a first device. The second sensing measurement result is a sensing measurement result obtained by preprocessing a first sensing measurement result. The first sensing measurement result is a sensing measurement result corresponding to a sensing measurement quantity obtained by the first device based on a received first signal.

A third aspect provides a sensing apparatus, including:
a processing module, configured preprocess a first sensing measurement result to obtain a second sensing measurement result, where the first sensing measurement result is a sensing measurement result corresponding to a sensing measurement quantity obtained by the first device based on a received first signal; and
a reporting module, configured to report the second sensing measurement result to a second device.

A fourth aspect provides a sensing apparatus, including:
a first obtaining module, configured to obtain a second sensing measurement result transmitted by a first device, where the second sensing measurement result is a sensing measurement result obtained by preprocessing a first sensing measurement result, and the first sensing measurement result is a sensing measurement result corresponding to a sensing measurement quantity obtained by the first device based on a received first signal.

A fifth aspect provides a communication device, including a processor and a memory. The memory stores a program or instructions executable by a processor. The program or the instruction, when executed by the processor, implement the steps of the sensing method in the first aspect or the second aspect.

A sixth aspect provides a first device, including a processor and a communication interface. The processor is configured to preprocess a first sensing measurement result to obtain a second sensing measurement result. The first sensing measurement result is a sensing measurement result corresponding to a sensing measurement quantity obtained by the first device based on a received first signal. The communication interface is configured to report the second sensing measurement result to a second device.

A seventh aspect provides a second device, including a processor and a communication interface. The communication interface is configured to obtain a second sensing measurement result transmitted by a first device. The second sensing measurement result is a sensing measurement result obtained by preprocessing a first sensing measurement result. The first sensing measurement result is a sensing measurement result corresponding to a sensing measurement quantity obtained by the first device based on a received first signal.

An eighth aspect provides a sensing system, including a first device and a second device. The first device may be configured to perform the steps of the sensing method in the first aspect. The second device may be configured to perform the steps of the sensing method in the second aspect.

A ninth aspect provides a readable storage medium. The readable storage medium stores a program or instructions. The program or the instructions, when executed by a processor, implement the steps of the method in the first aspect or the second aspect.

A tenth aspect provides a chip. The chip includes a processor and a communication interface. The communication interface is coupled to the processor. The processor is configured to execute a program or instructions to implement the method in the first aspect or the second aspect.

An eleventh aspect provides a computer program product. The computer program product is stored in a storage medium. The computer program product is executed by at least one processor to implement the steps of the sensing method in the first aspect or implement the steps of the sensing method in the second aspect.

In embodiments of this application, after the first sensing measurement result corresponding to the sensing measurement quantity is determined based on the received first signal, the first sensing measurement result is preprocessed, to obtain the second sensing measurement result that meets the corresponding requirement. For example, interpolation or sample extraction is performed on first sensing measurement results of a plurality of resources, so that the processed second sensing measurement result is a result obtained by uniformly sampling the first sensing measurement results of the corresponding resources. In this way, the second sensing measurement result can meet a reporting requirement of uniform sampling. For another example, the first sensing measurement results are merged or compressed, so that the second sensing measurement result can meet a reporting requirement of reducing reporting overheads.

### BRIEF DESCRIPTION OF THE DRAWINGS

FIG. 1 is a structural diagram of a communication system to which embodiments of this application may be applied;
FIG. 2 is a first schematic flowchart of a sensing method according to an embodiment of this application;
FIG. 3 is an architecture diagram of a network interface according to an embodiment of this application;
FIG. 4 is a schematic diagram of locations of sensing signals according to an embodiment of this application;
FIG. 5 is a schematic diagram of a distribution of a first sensing measurement result in a time domain according to an embodiment of this application;
FIG. 6 is a schematic diagram of a distribution of a second sensing measurement result in a time domain according to an embodiment of this application;
FIG. 7 is a schematic diagram of an amplitude distribution of a first sensing measurement result in a time domain according to an embodiment of this application;
FIG. 8 is a schematic diagram of an amplitude distribution of a second sensing measurement result in a time domain according to an embodiment of this application;
FIG. 9 is a schematic diagram of an FFT operation result of a first sensing measurement result according to an embodiment of this application;
FIG. 10 is a second schematic flowchart of a sensing method according to an embodiment of this application;
FIG. 11 is a first schematic diagram of modules of a sensing apparatus according to an embodiment of this application;
FIG. 12 is a structural block diagram of a communication device according to an embodiment of this application;
FIG. 13 is a structural diagram of a terminal according to an embodiment of the present invention;
FIG. 14 is a second schematic diagram of modules of a sensing apparatus according to an embodiment of this application;
FIG. 15 is a first structural block diagram of a network side device according to an embodiment of the present disclosure; and
FIG. 16 is a second structural block diagram of a network side device according to an embodiment of the present disclosure.

### DETAILED DESCRIPTION

The technical solutions of embodiments of this application are clearly described below with reference to drawings in embodiments of this application. Apparently, the described embodiments are merely some rather than all of embodiments of this application. All other embodiments obtained by a person skilled in the art based on embodiments of this application fall within the protection scope of this application.

Terms "first", "second", and the like in the specification and the claims of this application are used for distinguishing between similar objects, rather than describing a specific sequence or order. It should be understood that the terms used in this case may be transposed where appropriate, so that embodiments of this application may be implemented in a sequence other than those illustrated or described herein. In addition, objects defined by "first" and "second" are generally of the same class and do not limit a quantity of objects. For example, one first object may be arranged, or a plurality of objects may be arranged. In addition, "and/or" used in the specification and the claims indicates at least one of connected objects. The character "/" generally indicates an "or" relationship between associated objects.

It should be noted that, technologies described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. Terms "system" and "network" in the embodiments of this application are usually interchangeably used, and the described technologies may be used for both the systems and the radio technologies mentioned above, as well as for another system and radio technology. A new radio (New Radio, NR) system is described below for an illustrative purpose, and the term NR is used in most of the following descriptions, although these technologies may be applied to applications other than applications of the NR system, such as a 6th Generation (6th Generation, 6G) communication system.

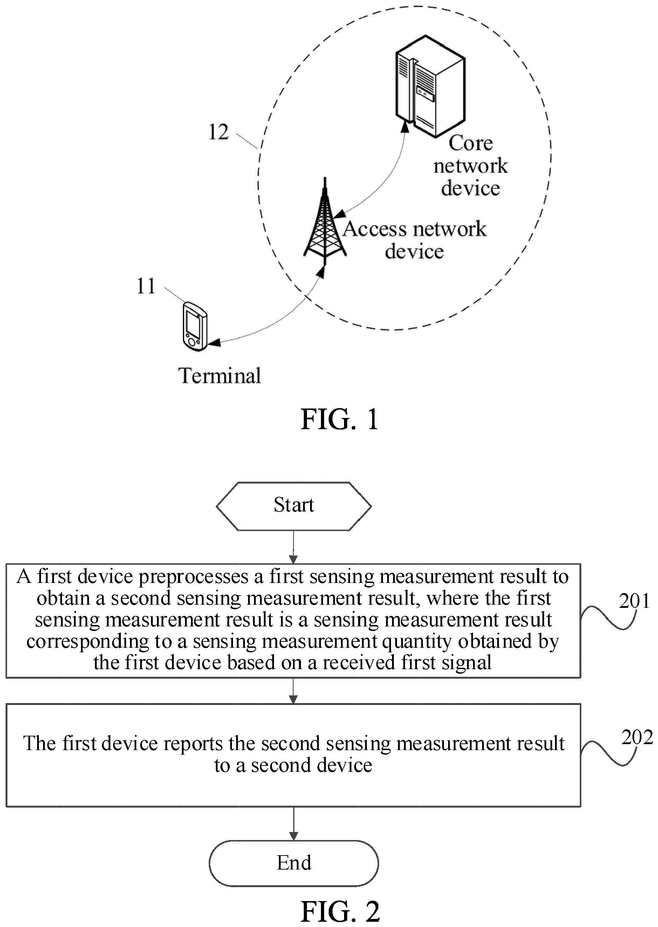

FIG. 1 is a block diagram of a wireless communication system to which embodiments of this application may be applied. The wireless communication system includes a terminal 11 and a network side device 12. The terminal 11 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), an augmented reality (augmented reality, AR)/virtual reality (virtual reality, VR) device, a robot, a wearable device (Wearable Device), an on-board device (Vehicle User Equipment, VUE), a pedestrian user equipment (Pedestrian User Equipment, PUE), smart home (a home device with a wireless communication capability, such as a refrigerator, a television, a washing machine, or furniture), a game console, a personal computer (personal computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle, a smart ankle chain, and the like), a smart wristband, smart clothing, and the like. It should be noted that, a specific type of the terminal 11 is not limited in embodiments of this application. The network side device 12 may include an access network device or a core network device. The access network device may also be referred to as a wireless access network device, a radio access network (Radio Access Network, RAN), a wireless access network function, or a wireless access network unit. The access network device may include a base station, a wireless local area network (Wireless Local Area Network, WLAN) access point, a wireless fidelity (Wireless Fidelity, Wi-Fi) node, and the like, The base station may be referred to as a NodeB, an evolved NodeB (eNB), an access point, a base transceiver station (Base Transceiver Station, BTS), a radio base station, a radio transceiver, a basic service sets (Basic Service Set, BSS), an extended service set (Extended Service Set, ESS), a household NodeB, a household evolved NodeB, a transmitting receiving point (Transmitting Receiving Point, TRP), or some other appropriate term in the field, as long as the same technical effect is achieved. The base station is not limited to a specific technical term. It should be noted that, in embodiments of this application, only a base station in the NR system is used as an example, but the specific type of the base station is not limited. The core network device may include but is not limited to at least one of a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data warehouse (Unified Data Warehouse, UDR), a home subscription server (Home Subscription Server, HSS), a centralized network configuration (Centralized network configuration, CNC), a network storage function (Network Repository Function, NRF), an network exposure function (Network Exposure Function, NEF), a local NEF (Local NEF, L-NEF), a Binding Support Function (Binding Support Function, BSF), an Application Function (application function, AF), and the like. It should be noted that, in embodiments of this application, only a core network device in the NR system is used as an example, but the specific type of the core network device is not limited.

To enable a technical person of the art to better understand embodiments of this application, the following description is provided first.

Integrated sensing and communication means realizing an integrated design of communication and sensing functions through spectrum sharing and hardware sharing in a same system. During information transmission, a system can sense information such as an orientation, a distance, and a speed, and detect, track, and recognize a target object or event. A communication system and a sensing system complement each other, to realize overall performance improvement and better service experience.

Future mobile communication systems, such as a beyond 5G (Beyond 5G, B5G) system or a 6G system, will have not only a communication capability but also a sensing capability. The sensing capability is a capability enabling one or more devices to sense information of a target object such as an orientation, a distance, and a speed or to detect, track, recognize, and image a target object, an event, an environment, or the like through wireless signal transmission and receiving. With deployment of small base stations with a high bandwidth capability such as millimeter waves and terahertz in the 6G network in the future, sensing resolution is significantly improved compared with that of centimeter waves, so that the 6G network can provide more refined sensing services.

Integrated radar and communication is a typical communication-sensing fused application. In the past, a radar system and a communication system were strictly distinguished from each other due to different research objects and focuses, which are researched separately in most scenarios. In fact, the radar system and the communication system are both typical information transmission, obtaining, processing, and exchange manners, and have many similarities in terms of working principle, system architecture, and frequency band. The integrated design of radar and communication has high feasibility, which is mainly reflected in the following aspects: First, the communication system and the sensing system are both based on the electromagnetic wave theory, which complete information obtaining and transmission through transmission and receiving of electromagnetic waves. The communication system and the sensing system both have structures such as an antenna, a transmitter end, a receiver end, and a signal processor, with significant overlapping in hardware resource. With development of technologies, increasing overlapping exist between the two in working frequency band. In addition, similarities in terms of key technology such as signal modulation, reception detection, and waveform design also exist. The fusion of the communication system and the radar system can bring many advantages, such as reduced costs, reduced sizes, reduced power consumption, improved spectrum efficiency, and reduced mutual interference, thereby improving overall performance of the system.

Currently, many related researches have been made on the integrated design of the radar system and the communication system. Typical integration designs include: spectrum coexistence, which means that the two systems work independently but information exchange is allowed to reduce mutual interference; receiver end sharing, in which case the two systems transmit respective signal waveforms but the waveforms of the two systems need to be orthogonal to avoid impact on respective receiving and detection; transmitter end sharing, which means that a transmitter end transmits a joint waveform of the radar and the communication; and transceiver end sharing, which means that transceiver sides of the two systems share resources, which also requires use of a joint waveform or orthogonal waveforms.

During sensing, sensing may be performed in a single-station mode, that is, co-located sensing is performed. The transmitter end transmits a signal for sensing, and then receives an echo signal to perform analysis and extract sensing parameters. For example, a base station serves as a transmitter end and a receiver end for the signal for sensing, and a terminal or another object serves as a to-be-sensed object. Alternatively, sensing may be performed in a dual-station/multi-station mode, that is, a transmitter end and a receiver end do not share a same address. The transmitter end transmits a signal for sensing, and another receiver end receives the signal to perform analysis and extract sensing parameters. For example, a base station 1 serves as a transmitter end for the signal for sensing, and a terminal or a base station 2 serves as a receiver end for the signal for sensing. Similarly, the transmitter end for the sensing in the single-station mode or the multi-station mode may alternatively be a terminal.

The communication system needs to jointly transmit a modulation symbol that carries information and a pilot symbol used for channel estimation, which focuses on decoding performance. A channel estimation algorithm thereof merely needs to estimate a composite channel with limited unknown parameters, which usually aims to improve a throughput and transmission reliability. Concerned performance indicators generally include spectrum efficiency, a channel capacity, a signal to noise ratio (Signal to Noise Ratio, SNR), a signal-to-noise and interference ratio (Signal-To-Noise And Interference Ratio, SINR), a bit error rate (Bit Error Rate, BER), a block error rate (Block Error Rate, BLER), a symbol error rate (Symbol Error Rate, SER), and the like. During signal transmission by the sensing system, a problem of information carrying does not need to be considered. Usually, an optimized or unmodulated transmission signal is used. Attention is paid on a change made by a sensed target to the transmission signal, that is, a response characteristic. An optimization goal is usually to improve a parameter estimation precision. A performance metric may be a fuzzy function, a Cramér-Rao lower bound, a root mean square error, mutual information, a rate distortion function, a radar estimation rate, a Welch lower bound, and some indicators related to sensing scenarios and requirements.

Currently, in many researches, the communication system is used to realize a sensing function. For example, wireless sensing-related measurement is performed based on a Wi-Fi signal, an LTE signal, or an NR signal, and a sensing result is obtained. Since various types of sensing services exist, to ensure system performance after the fusion of the communication function and the sensing function, resource allocation and measurement reporting mechanisms for communication signals and sensing signals need to be comprehensively considered based on an actual service requirement.

A sensing method provided in embodiments of this application is described below in detail through some embodiments and application scenarios with reference to the drawings.

As shown in FIG. 2, an embodiment of this application provides a sensing method, including the following steps:
Step 201: A first device preprocesses a first sensing measurement result to obtain a second sensing measurement result, where the first sensing measurement result is a sensing measurement result corresponding to a sensing measurement quantity obtained by the first device based on a received first signal.

In this step, the above preprocessing includes at least one of
interpolation;
sample extraction;
clutter suppression;
noise suppression;
outlier removal;
filtering;
merging; and
compression.

In this step, the first signal includes a signal of at least one of the following signal types:
a sensing signal;
a communication signal; and
an integrated sensing and communication signal.

The sensing signal in this embodiment of this application is a signal used for obtaining information of a target object such as an orientation, a distance, and a speed or used for detecting, tracking, recognizing, and imaging a target object, an event, an environment, or the like.

The sensing signal includes at least one of:
common radar signals such as a continuous wave (Continuous Wave, CW) signal, a frequency modulated continuous wave (FMCW) signal, a simple pulse signal, and a chirp (Chirp) pulse signal.

The above communication signal may be at least one of a communication reference signal and a data signal, and includes at least
a demodulation reference signal (Demodulation Reference Signal, DMRS) for a physical downlink control channel (Physical downlink control channel, PDCCH)/paging PDCCH, a DMRS for a physical downlink shared channel (Physical downlink shared channel, PDSCH)/paging PDSCH, a DMRS for a physical uplink shared channel (Physical Uplink Shared Channel, PUSCH), a DMRS for a physical uplink control channel (Physical Uplink Control Channel, PUCCH), a DMRS for a physical broadcast channel (Physical Broadcast Channel, PBCH), a CSI reference signal (CSI Reference Signal, CSI-RS), a sounding reference signal (Sounding Reference Signal, SRS), a phase-tracking reference signal (Phase-tracking reference signal, PTRS), a positioning reference signal (Positioning Reference Signal, PRS), a tracking reference signal (Tracking Reference Signal, TRS), a primary synchronization signal (Primary Synchronisation Signal, PSS), a secondary synchronization signal (Secondary Synchronization Signal, SSS), data symbols in the data channels PDSCH, PUSCH, and PBCH, and the like.

The above integrated sensing and communication signal is a signal that may be used for both communication and sensing.

Optionally, the sensing measurement quantity includes at least one of
original channel information;
signal strength information;
spectral information;
multi-path information;
angle information;
information regarding differences between signals corresponding to different antennas; and
target parameter information determined based on the original channel information.

The original channel information includes at least one of:
a channel matrix H; and
channel state information (Channel State Information, CSI), such as an amplitude/amplitude squared/phase of a frequency-domain channel response, or characteristics of an I channel signal and a Q channel signal in the frequency-domain channel response, for example, amplitudes/amplitudes squared of the I channel signal and the Q channel signal.

Optionally, the signal strength information includes at least one of:
a reference signal received power (Reference Signal Received Power, RSRP); and
a received signal strength indicator (Received Signal Strength Indicator, RSSI).

Optionally, the spectral information includes at least one of:
a power-delay profile (Power-Delay Profile, PDP);
a Doppler power spectrum;
a power azimuth spectrum (Power Azimuth Spectrum, PAS); and
pseudospectral information, for example, a multiple signal classification (MUSIC) spectrum.

Optionally, the multi-path information includes at least one of:
a power of each path in a multi-path channel (including at least a first arrival path, a line of sight (Line Of Sight, LOS) path, a first-order reflection path, and a multi-order reflection path);
a delay of each path in the multi-path channel; and
an angle of each path in the multi-path channel.

The information regarding differences between signals corresponding to different antennas includes at least one of
a quotient or a conjugate product of frequency-domain channel responses of a first antenna and a second antenna (or an amplitude or a phase of the quotient or the conjugate product of the frequency-domain channel responses of the first antenna and the second antenna, or an I channel or a Q channel of the quotient or the conjugate product of the frequency-domain channel responses of the first antenna and the second antenna, or a projection operation of the quotient or the conjugate product of the frequency-domain channel responses of the first antenna and the second antenna, which may be I*cos(theta)+Q*sin(theta), where theta represents an angle value, different thetas correspond to different projections, I represents I channel data, and Q represents Q channel data);
an amplitude ratio or an amplitude difference between received signals of the first antenna and the second antenna;
a phase difference between the signals of the first antenna and the second antenna; and
a delay difference between the signals of the first antenna and the second antenna.

The target parameter information determined based on the original channel information includes at least one of
a Doppler expansion;
a Doppler frequency shift;
a maximum delay extension;
an angle extension;
a coherent bandwidth; and
a coherent time.

Optionally, the angle information includes at least one of
an arrival angle; and
a departure angle.

The angle information includes UE side angle information, base station side angle information, and reflection point angle information.

Step 202: The first device reports the second sensing measurement result to a second device.

In this embodiment of this application, after the first sensing measurement result corresponding to the sensing measurement quantity is determined based on the received first signal, the first sensing measurement result is preprocessed, to obtain the second sensing measurement result that meets the corresponding requirement. For example, interpolation or sample extraction is performed on first sensing measurement results of a plurality of resources, so that the processed second sensing measurement result is a result obtained by uniformly sampling the first sensing measurement results of the corresponding resources. In this way, the second sensing measurement result can meet a reporting requirement of uniform sampling. For another example, the first sensing measurement results are merged or compressed, so that the second sensing measurement result can meet a reporting requirement of reducing reporting overheads.

Optionally, that a first device preprocesses a first sensing measurement result includes:

The first device obtains preprocessing information of the first sensing measurement result indicated by the second device.

The first device preprocesses the first sensing measurement result based on the preprocessing information.

Optionally, That the first device obtains preprocessing information of the first sensing measurement result indicated by the second device includes:

The first device obtains the preprocessing information based on target indication information transmitted by the second device.

The target indication information includes at least one of preprocessing indication information and sensing indication information. The preprocessing indication information indicates the preprocessing information, and the sensing indication information is associated with the preprocessing information.

Herein, the preprocessing information may be directly indicated by the preprocessing indication information, or indirectly indicated by the sensing indication information.

Optionally, the preprocessing information includes at least one of:
whether to preprocess the first sensing measurement result, for example, denote the first sensing measurement result as 1-bit information, where the 1-bit information being 0 indicates that the first sensing measurement result is not to be preprocessed, and the 1-bit information being 1 indicates that the first sensing measurement result is to be preprocessed;
condition information for enabling preprocessing, for example, the condition information may be specifically an effective sampling point proportion of the first sensing measurement result being greater than a first preset threshold when the preprocessing manner is interpolation, the condition information may be specifically a sampling rate of the first sensing measurement result being greater than a preset threshold or a data volume of the first sensing measurement result being greater than a preset threshold when the preprocessing manner is sample extraction, the condition information may be specifically a clutter component of the first sensing measurement result being greater than a preset threshold when the preprocessing manner is clutter suppression, the condition information may be an SNR of the first sensing measurement result being less than a second preset threshold or being located within a preset range when the preprocessing manner is noise suppression, the condition information may be specifically a variance of the first sensing measurement result being greater than a preset threshold when the preprocessing manner is outlier removal, the condition information may be specifically a sum of signal amplitudes within a frequency range being greater than a preset threshold when the preprocessing manner is filtering, and the condition information may be specifically a data volume of the first sensing measurement result being greater than a preset threshold when the preprocessing manner is compression;
information regarding a requirement on a first parameter corresponding to the first sensing measurement result;
information regarding a requirement on a first parameter corresponding to the second sensing measurement result;
a preprocessing manner; and
preprocessing parameter information associated with the preprocessing manner.

The first parameter includes at least one of information regarding a proportion of effective sample points and a sensing performance indicator.

In this embodiment of this application, for the information regarding a requirement on the first parameter corresponding to the first sensing measurement result, for example, the requirement information is that an effective sampling point proportion corresponding to the first sensing measurement result needs to be greater than a predetermined threshold or the sensing performance indicator corresponding to the first sensing measurement result needs to be greater than a predetermined threshold. If the effective sampling point proportion corresponding to the first sensing measurement result is less than the predetermined threshold, it is determined that the first sensing measurement result is invalid, or if the sensing performance indicator corresponding to the first sensing measurement result is less than the predetermined threshold, it is determined that the first sensing measurement result is invalid. In this case, the first device may not preprocess the first sensing measurement result.

For the information regarding a requirement on the first parameter corresponding to the second sensing measurement result, for example, the requirement information is that an effective sampling point proportion corresponding to the second sensing measurement result needs to be greater than a predetermined threshold or a sensing performance indicator corresponding to the second sensing measurement result needs to be greater than a predetermined threshold. If it is determined that the effective sampling point proportion corresponding to the second sensing measurement result is less than the predetermined threshold or the sensing performance indicator corresponding to the second sensing measurement result is less than the predetermined threshold after the first sensing measurement result is preprocessed, the second sensing measurement result may not be reported.

Optionally, the preprocessing manner includes at least one of interpolation, sample extraction, clutter suppression, noise suppression, outlier removal, filtering, merging, and compression.

The interpolation may be time-domain interpolation for obtaining a second sensing measurement result at a specific time point, or may be frequency-domain interpolation for obtaining a second sensing measurement result at a specific frequency, or may be space-domain interpolation for obtaining a second sensing measurement result at a specific antenna or space position. Specifically, during interpolation to obtain the second sensing measurement result by using the first sensing measurement result, a first sensing measurement result may be selected for interpolation based on the sensing performance indicator corresponding to the first sensing measurement result. Specifically, at least one first sensing measurement result with an optimal sensing performance indicator or with a sensing performance indicator exceeding a preset threshold is selected from first sensing measurement results corresponding to at least one resource location adjacent to a target resource location (in time domain, frequency domain, or space domain) for interpolation.

The sample extraction may be time-domain sample extraction, frequency-domain sample extraction, or space-domain sample extraction.

The clutter suppression means removing clutter components from the first sensing measurement result, which may be realized, for example, by removing a static clutter component from the sensing measurement result through direct current removal (time-domain mean subtraction).

The noise suppression means suppressing noise in the second sensing measurement result, which may be realized by transform domain noise suppression (discrete Fourier transform (Discrete Fourier Transform, DFT) noise suppression), average noise suppression, minimum mean square error (Minimum Mean Square Error, MMSE) filtering noise suppression, discrete wavelet transform (Discrete Wavelet Transform, DWT) noise suppression, principal component analysis (Principal Component Analysis, PCA) noise suppression, or the like.

The outlier removal means removing outliers from the first sensing measurement result. The outliers may be discarded or replaced and the methods. The outlier removal may be realized by, for example, a median absolute deviation (Median Absolute Deviation, MAD) algorithm, a Hampel filtering method, a standard deviation method, a percentile method, or the like.

The filtering may be low pass filtering, high pass filtering, bandpass filtering, or bandstop filtering, or may be a specific filtering manner such as Savitzky-Golay filtering, Hampel filtering, alpha filtering, Kalman filtering, Butterworth filtering, Chebyshev filtering, Elliptic filtering, or Equiripple filtering.

The merging may be summation, difference calculation, product calculation, quotient calculation, conjugate multiplication, correlation, convolution, and the like of at least two first sensing measurement results.

The compression may be transformation domain compression. For example, time-domain data is transformed to Doppler-domain data and then sample points with amplitudes exceeding a threshold are retained, frequency-domain data is transformed to delay-domain data and then sample points with amplitudes exceeding a threshold are retained, or time-frequency-domain data is transformed to delay-Doppler-domain data and then sample points with amplitudes exceeding a threshold are retained. The compression may alternatively be other compression manners such as variable rate Huffman coding, A-law coding, or µ-law coding.

Optionally, the preprocessing parameter information includes at least one of:
time-domain resource information, frequency-domain resource information, or spatial resource information corresponding to the second sensing measurement result;
an interpolation manner;
an interpolation density;
an interpolation quantity;
an extraction manner;
an extraction density;
an extraction quantity;
a clutter suppression manner;
a window size for direct current removal;
information regarding an algorithm for noise suppression;
target signal-to-noise ratio SNR threshold information;
an outlier removal manner;
an outlier processing manner;
a window size for outlier removal;
a filtering manner;
a filtering parameter;
filter information;
a merging manner;
a quantity of first sensing measurement results to be merged;
information regarding a requirement on the first sensing measurement results to be merged;
a merging dimension;
a compression manner;
a compression ratio; and
data volume information after compression.

In a specific embodiment of this application, when the preprocessing manner is the interpolation manner, the above preprocessing parameter information includes at least one of an interpolation manner; an interpolation density; an interpolation quantity; and time-domain resource information, frequency-domain resource information, or spatial resource information corresponding to the second sensing measurement result.

In a specific embodiment of this application, when the preprocessing manner is the sample extraction manner, the above preprocessing parameter information includes at least one of an extraction manner; an extraction density; an extraction quantity; and time-domain resource information, frequency-domain resource information, or spatial resource information corresponding to the second sensing measurement result.

Specifically, the above time-domain resource information may be a time point, a time window, a period, or a time-domain density corresponding to the second sensing measurement result. One or more time points may be set. The time-domain resource information may be represented in a form of an absolute time, for example, coordinated universal time (Coordinated Universal Time, UTC), a frame number, a half-frame number, a subframe number, or a time slot number, or may be represented in a form of a relative time.

The above frequency-domain resource information may be a frequency, a frequency range, or a frequency density corresponding to the second sensing measurement result. A frequency resource may be represented by a true frequency value, a subcarrier (SubCarrier, SC), a resource element (Resource Element, RE), or a physical resource block (Physical Resource Block, PRB).

The above spatial resource information may be a receiving antenna index, a transmitting antenna index, a transceiving antenna index, or spatial position coordinates corresponding to the second sensing measurement result.

In a specific embodiment of this application, when the preprocessing manner is the clutter suppression, the above preprocessing parameter information includes at least one of the clutter suppression method and the window size for the direct current removal.

In a specific embodiment of this application, when the preprocessing manner is the noise suppression, the above preprocessing parameter information includes at least one of the noise suppression algorithm and the target SNR threshold.

In a specific embodiment of this application, when the preprocessing manner is the outlier removal, the above preprocessing parameter information includes at least one of the outlier removal method, the outlier processing manner (discarding or replacement) of outliers, and the window size for outlier removal.

In a specific embodiment of this application, when the preprocessing manner is the filtering, the above preprocessing parameter information includes at least one of the filtering manner, such as low pass filtering, high pass filtering, bandpass filtering, or bandstop filtering, a corresponding filtering parameter, and a specific filter to be adopted.

In a specific embodiment of this application, when the preprocessing manner is the merging, the above preprocessing parameter information includes at least one of the merging manner, the quantity of and the requirement for the first sensing measurement results to be merged (for example, corresponding sensing performance indicators need to exceed a preset threshold), and the merging dimension (for example, the time domain or the frequency domain).

In a specific embodiment of this application, when the preprocessing manner is the compression, the above preprocessing parameter information includes at least one of the compression manner, the compression ratio, and the data volume of the second sensing measurement result obtained after compression.

Optionally, the sensing indication information includes at least one of
sensing requirement information;
a sensing measurement quantity;
information regarding an algorithm for obtaining a sensing result based on a sensing measurement, which includes an algorithm type, such as a fast Fourier transform (Fast Fourier Transform, FFT)/inverse fast Fourier transform (Inverse Fast Fourier Transform, IFFT) algorithm, a wavelet transform algorithm, a MUSIC algorithm, an estimation of signal parameters using rotational invariance techniques (Estimation of Signal Parameters using Rotational Invariance Techniques, ESPRIT) algorithm, or a compressed sensing (Compressed Sensing, CS) algorithm; and
sensing performance indicator information, which includes a definition/calculation manner of a sensing performance indicator, a sensing performance indicator threshold, and the like.

Specifically, the sensing performance indicator includes at least one of:
a sensing precision/sensing error, a sensing resolution, a sensing range, a sensing delay, a detection probability, a false alarm probability, a quantity of targets that can be simultaneously detected, an SNR, a RSRP, an RSSI, reference signal receiving quality (Reference Signal Receiving Quality, RSRQ), a signal-to-clutter ratio, a sidelobe feature of a signal (a main lobe to sidelobe ratio of the signal), a peak to average power ratio (Peak to Average Power Ratio, PAPR), a variance, a standard deviation, a mean absolute deviation, a peak amplitude of a signal for sensing, and a ratio of a target signal component for sensing to another signal component for sensing.

As for the ratio of the target signal component used for sensing to the another signal component for sensing, the target signal component is a signal component of the received signal for sensing greatly affected by a sensed target, which may be:
an amplitude or an amplitude squared corresponding to a sample point in a frequency-domain channel response of the received signal with a largest amplitude, a sum of amplitudes and/or amplitudes squared corresponding to a plurality of sample points with the largest amplitude, an amplitude (or an amplitude squared) of a sample point corresponding to a specified SC or PRB, or a sum of amplitudes (or amplitudes squared) of sample points corresponding to a plurality of specified SCs or PRBs.

In this case, the another signal component may be a sum of amplitudes or amplitudes squared corresponding to all sample points of the frequency-domain channel response of the received signal, an average of the amplitudes or the amplitudes squared corresponding to all of the sample points, a sum of amplitudes or amplitudes squared corresponding to all or some sample points other than one or more sample points with the largest amplitude/sample points corresponding to specified SCs or PRBs, or an average of the amplitudes or the amplitudes squared corresponding to all or some sample points other than the one or more sample points with the largest amplitude/the sample points corresponding to the specified SCs or PRBs.

Alternatively, the target signal component is an amplitude or an amplitude squared corresponding to a sample point in an inverse Fourier transform (IFFT) result of the frequency-domain channel response of the received signal with a largest amplitude or a sum of amplitudes and/or amplitudes squared corresponding to a plurality of sample points with the largest amplitude.

In this case, the another signal component may be a sum of amplitudes or amplitudes squared corresponding to all sample points of the inverse Fourier transform (IFFT) result of the frequency-domain channel response of the received signal, an average of the amplitudes or the amplitudes squared corresponding to all of the sample points, a sum of amplitudes or amplitudes squared corresponding to all or some sample points other than one or more sample points with the largest amplitude, or an average of the amplitudes or the amplitudes squared corresponding to all or some sample points other than the one or more sample points with the largest amplitude.

Alternatively, the target signal component is an amplitude or an amplitude squared corresponding to a sample point in an FFT result of first time-domain data with a largest amplitude or a sum of amplitudes and/or amplitudes squared corresponding to a plurality of sample points with the largest amplitude. The first time-domain data is a frequency-domain channel response corresponding to a frequency resource (for example, an SC, an RE, or a PRB) of received signals at different sampling moments within a period of time, an amplitude, an amplitude squared, a phase, I channel data, or Q channel data of the frequency-domain channel response, or data composed of a result of a first operation on the I channel data and the Q channel data (which may be I*cos(theta)+Q*sin(theta), where theta is an angle value, I represents the I channel data, and Q represents the Q channel data).

In this case, the another signal component may be a sum of amplitudes or amplitudes squared corresponding to all sample points of the FFT result of the first time-domain data, an average of the amplitudes or the amplitudes squared corresponding to all of the sample points, a sum of amplitudes or amplitudes squared corresponding to all or some sample points other than one or more sample points with the largest amplitude, or an average of the amplitudes or the amplitudes squared corresponding to all or some sample points other than the one or more sample points with the largest amplitude.

Alternatively, the target signal component is a two-dimensional Fourier transform result of the channel response of the received signal, that is, an amplitude or an amplitude squared corresponding to a sample point in a delay-Doppler-domain result with a largest amplitude or a sum of amplitudes and/or amplitudes squared corresponding to a plurality of sample points with the largest amplitude.

In this case, the another signal component may be a sum of amplitudes or amplitudes squared corresponding to all sample points of the frequency-domain channel response of the received signal, an average of the amplitudes or the amplitudes squared corresponding to all of the sample points, a sum of amplitudes or amplitudes squared corresponding to all or some sample points other than one or more sample points with the largest amplitude, or an average of the amplitudes or the amplitudes squared corresponding to all or some sample points other than the one or more sample points with the largest amplitude.

Alternatively, the target signal component is an amplitude or an amplitude squared corresponding to a sample point in a calculated pseudospectrum (for example, a MUSIC spectrum) of the channel response of the received signal with a largest amplitude or a sum of amplitudes and/or amplitudes squared corresponding to a plurality of sample points with the largest amplitude.

In this case, the another sensing signal component may be a sum of amplitudes or amplitudes squared corresponding to all sample points of the pseudospectrum, an average of the amplitudes or the amplitudes squared corresponding to all of the sample points, a sum of amplitudes or amplitudes squared corresponding to all or some sample points other than one or more sample points with the largest amplitude, or an average of the amplitudes or the amplitudes squared corresponding to all or some sample points other than the one or more sample points with the largest amplitude.

Further, in a multi-antenna (multiple-input multiple-output (Multiple-Input Multiple-Output, MIMO)) scenario, the frequency-domain channel response of the received signal may be a frequency-domain channel response corresponding to a transmitting and receiving antenna combination (for example, a transmitting antenna 1 and a receiving antenna 1 or a transmitting antenna 1 and a receiving antenna 2 performs receiving), or may be a combination of frequency-domain channel responses corresponding to at least two transmitting and receiving antenna combinations, for example, a quotient or a conjugate product of the frequency-domain channel responses corresponding to the two transmitting and receiving antenna combinations.

Optionally, the sensing requirement information includes at least one of
a sensing service type, such as environmental reconstruction, respiratory detection, and action recognition;
a sensing area, such as geographical coordinates of the sensing area, and a length, a width, and a height of and a distance to the sensing area;
a type of a sensed target, such as a car, a motorcycle, and a pedestrian, which indirectly indicates a movement speed range of the sensed target and a reflection power level for a wireless signal;
sensing/integrated sensing and communication quality of service (Quality of Service, QoS), which may include a sensing/integrated sensing and communication service type, a sensing/integrated sensing and communication service priority, a requirement for a sensing resolution, a requirement for a sensing precision or a sensing error, a sensing delay budget, a requirement for a maximum sensing range, a requirement for a continuous sensing capability, a requirement for a sensing update frequency, and the like; and communication QoS (for an integrated sensing and communication service), such as a communication delay budget and a false alarm rate;
a quantity of sensed targets within the sensing area;
a density of the sensed targets within the sensing area; and
a requirement for a sensing result.

The sensing measurement quantity in the above sensing indication information has been explained in the above description, which is not described in detail herein again. The sensing measurement quantity corresponds to the first sensing measurement result, and is used for instructing the second device to calculate the corresponding first sensing measurement result based on the received signal for sensing.

Optionally, before the first device processes the first sensing measurement result based on the preprocessing information, the method further includes:

The first device transmits feedback information of the preprocessing information to the second device. The feedback information includes first feedback information or second feedback information, the first feedback information is used for instructing the second device to re-indicate the preprocessing information, and the second feedback information is used for instructing the second device to reconfigure the first signal, and

The preprocessing, by the first device, the first sensing measurement result based on the preprocessing information includes: preprocessing, by the first device, the first sensing measurement result based on the preprocessing information re-indicated by the second device through preprocessing indication information in a case that the feedback information includes the first feedback information;
obtaining, by the first device, the first sensing measurement result based on the first signal reconfigured by the second device in a case that the feedback information includes the second feedback information; and preprocessing the first sensing measurement result based on the preprocessing information.

In this embodiment of this application, the first device notifies the second device to replace the preprocessing information or change a configuration of the first signal through the above feedback information, to ensure that the second sensing measurement result can meet the corresponding requirement.

Optionally, that the first device transmits feedback information of the preprocessing information to the second device includes:
the first device transmits the feedback information to the second device in a case that a target condition is met.

The target condition includes at least one of
the first device does not support the preprocessing manner indicated by the preprocessing information (due to a limited capability of the first device);
a first parameter corresponding to the second sensing measurement result does not meet requirement information indicated by the second device, for example, a sensing precision corresponding to the second sensing measurement result obtained after interpolation of the first sensing measurement result does not meet a sensing precision threshold requirement indicated in the sensing indication information; and
a first parameter corresponding to the first sensing measurement result does not meet the requirement information indicated by the second device.

The first parameter includes at least one of information regarding a proportion of effective sample points and a sensing performance indicator.

Optionally, before the first device obtains the preprocessing information of the first sensing measurement result indicated by the second device, the method further includes:

The first device transmits preprocessing capability information to the second device. The preprocessing capability information indicates a preprocessing capability supported by the first device, and the preprocessing capability information is used for determining the preprocessing information.

The preprocessing capability information includes a preprocessing manner supported by the first device and/or preprocessing parameter information associated with the preprocessing manner. The preprocessing manner and the preprocessing parameter information have been described in detail above, and therefore are not described herein again.

Herein, the first device transmits the supported preprocessing capability to the second device, so that the second device can configure preprocessing information for the first device based on the preprocessing capability.

It should be noted that, in this embodiment of this application, a transmitting and receiving manner of the signal for sensing during the sensing measurement includes the following manners. The first device may be a base station or a UE, and the second device may be a sensing network function device or a sensing network element of a core network, or may be a base station or a UE.

Manner 1: A base station A transmits the signal for sensing, and a base station B receives the signal for sensing.

The base station B serves as the first device, and the base station A serves as the second device.

Alternatively, the base station A/B serves as the first device, and the core network serves as the second device.

Manner 2: A base station transmits the signal for sensing, and a UE receives the signal for sensing.

The base station serves as the second device, and the UE serves as the first device.

The core network serves as the second device, and the base station/UE serves as the first device.

Manner 3: A base station transmits and receives signals.

The core network serves as the second device, and the base station serves as the first device.

Manner 4: A UE transmits and receives signals.

The base station serves as the second device, and the UE serves as the first device.

The core network serves as the second device, and the UE serves as the first device.

Manner 5: A UE transmits a signal, and a base station receives the signal.

The core network serves as the second device, and the base station serves as the first device.

Manner 6: A UE A transmits a signal, and a UE B receives the signal.

The UE A serves as the second device, and the UE B serves as the first device.

A base station to which the UE A/B is connected serves as the second device, and the UE A/B serves as the first device.

The core network serves as the second device, and the UE A/B serves as the first device.

In this embodiment of this application, the signal transmitting device may include a plurality of devices, and the signal receiving device may include a plurality of devices. The above base station may alternatively be a TRP, an AP, a relay, a reconfigurable intelligent surface (Reconfigurable Intelligent Surface, RIS), or the like.

Specifically, for the case in which the UE reports a second sensing measurement result to the base station or the core network, the following four scenarios may exist for sensing measurement:

The base station transmits a signal, and the UE receives the signal and calculates a second sensing measurement result that needs to be reported to the base station or the core network.

The UE transmits and receives signals, and calculates a second sensing measurement result that needs to be reported to the base station or the core network.

The UE A transmits a signal, and the UE B receives the signal and calculates a second sensing measurement result that needs to be reported to the UE A, the base station, or the core network (the second sensing measurement result may be directly reported by the UE B to the base station, or may be first transmitted by the UE B to the UE A and then reported by the UE A to the base station).

The UE A transmits a signal, and the UE B receives the signal and calculates a first sensing measurement result that needs to be reported to the UE A, and the UE A calculates a second sensing measurement result that needs to be reported to the base station or the core network based on the first sensing measurement result reported by the UE B.

For the case in which the base station reports a second sensing measurement result to the core network, the following seven scenarios may exist for sensing measurement:

The base station transmits a signal, the UE receives the signal and calculates a first sensing measurement result that needs to be reported to the base station, and the base station calculates a second sensing measurement result that needs to be reported to the core network based on the first sensing measurement result reported by the UE.

The UE transmits a signal, and the base station receives the signal and calculates a second sensing measurement result that needs to be reported to the core network.

The base station transmits and receives signals, and calculates a second sensing measurement result that needs to be reported to the core network.

The base station A transmits a signal, and the base station B receives the signal and calculates a second sensing measurement result that needs to be reported to the core network (the second sensing measurement result may be directly reported by the base station B to the core network, or may be first transmitted by the base station B to the base station A and then reported by the base station A to the core network).

The base station A transmits a signal, the base station B receives the signal and calculates a first sensing measurement result that needs to be reported to the base station A, and the base station A calculates a second sensing measurement result that needs to be reported to the base station or the core network based on the first sensing measurement result reported by the base station B.

The UE transmits and receives signals, and calculates a first sensing measurement result that needs to be reported to the base station, and the base station calculates a second sensing measurement result that needs to be reported to the core network based on the first sensing measurement result reported by the UE.

The UE A transmits a signal, the UE B receives the signal and calculates a first sensing measurement result that needs to be reported to the base station (the first sensing measurement result may be directly reported by the UE B to the base station, or may be first transmitted by the UE B to the UE A and then reported by the UE A to the base station), and the base station calculates a second sensing measurement result that needs to be reported to the core network based on the first sensing measurement result reported by the UE.

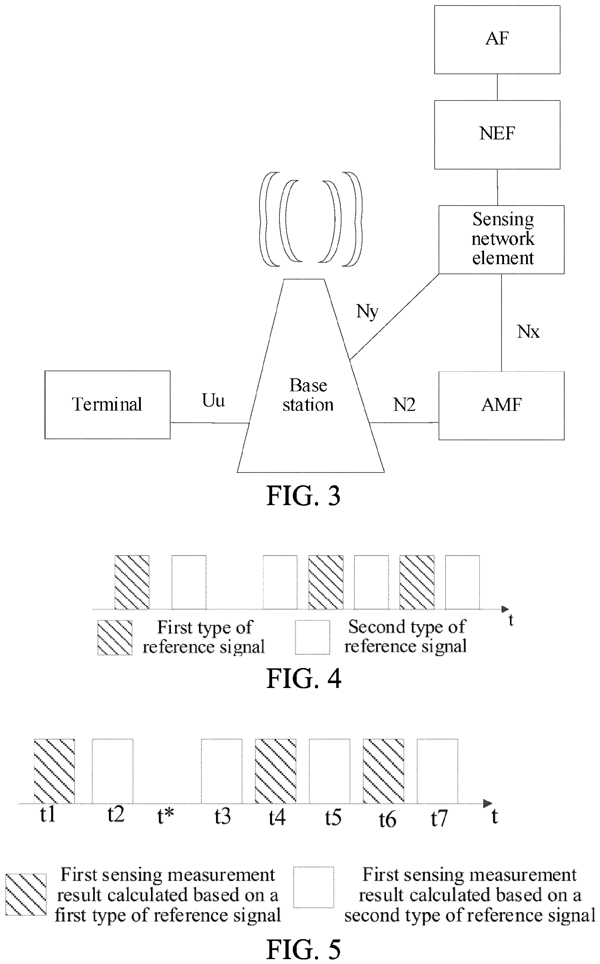

An architecture of a sensing network interface in embodiments of this application is shown in FIG. 3. A method for the UE to report the second sensing measurement result to a network function device or a network element (for example, the sensing network function device or the sensing network element) of the core network may be as follows: The second sensing measurement result may be reported through radio resource control (Radio Resource Control RRC) signaling, a medium access control (Medium Access Control, MAC) layer control element (Control Element, CE), non access strategy (Non Access Strategy NAS) signaling (to an AMF), layer 1 signaling (uplink control information (Uplink Control Information, UCI)), or other newly defined sensing signaling, or may be reported through a user plane (for example, the core network is a protocol data unit (Protocol Data Unit, PDU) session (session), and a RAN side is a data radio bearer (Data Radio Bearer, DRB) or a sensing-specific user plane channel).

From a perspective of a physical layer, transmission may be specifically realized through an uplink control channel, a service channel, or a random access channel, such as a PUCCH or a PUSCH in a connected state, or by initiating small data transmission (Small Data Transmission, SDT) in an idle (idle)/inactive (inactive) state, or by reporting to the base station through MSG1, MSG3, or MSG A in a random access process or through a newly defined sensing-specific channel. The base station transmits the second sensing measurement result to the AMF through an N2 interface, and the AMF forwards the second sensing measurement result to the network function device or the network element (for example, the sensing network function device/sensing network element) of the core network. Alternatively, the base station transmits the second sensing measurement result to a UPF through an N3 interface, and the UPF forwards the second sensing measurement result to the network function device or the network element (for example, the sensing network function device/sensing network element) of the core network. Alternatively, the base station transmits the second sensing measurement result to the network function device or the network element (for example, the sensing network function device/sensing network element) of the core network through a newly defined interface.

A method for the UE to report the second sensing measurement result to the base station may be as follows: The second sensing measurement result may be reported through RRC signaling, a MAC CE, layer 1 signaling (UCI), other newly defined sensing signaling, or a sensing-specific data exchange channel.

From a perspective of a physical layer, transmission may be specifically realized through an uplink control channel, a service channel, or a random access channel, such as a PUCCH or a PUSCH in a connected state, or by initiating SDT in an idle/active state, or by reporting to the base station through MSG1, MSG3, or MSG A in the random access process or through a newly defined sensing-specific channel.

A method for the UE B to report the second sensing measurement result to the UE A may be as follows: The second sensing measurement result may be reported through RRC signaling, a MAC CE, layer 1 signaling (sidelink control information (Sidelink Control Information, SCI)), other newly defined signaling bears, or a sensing-specific data exchange channel.

From a perspective of a physical layer, transmission may be specifically realized through a sidelink control channel, a service channel, or a feedback channel, such as a physical sidelink control channel (Physical SideLink Control Channel, PSCCH), a physical sidelink shared channel (Physical SideLink Shared Channel, PSSCH), a physical sidelink feedback channel (Physical SideLink Feedback Channel, PSFCH), or a newly defined sensing-specific channel.

The base station transmits the second sensing measurement result to the AMF through an N2 interface, and the AMF forwards the second sensing measurement result to the network function or the network element (for example, the sensing network function device/sensing network element) of the core network. Alternatively, the base station transmits the second sensing measurement result to a UPF through an N3 interface, and the UPF forwards the second sensing measurement result to the network function device or the network element (for example, the sensing network function device/sensing network element) of the core network. Alternatively, the base station transmits the second sensing measurement result to the network function device or the network element (for example, the sensing network function device/sensing network element) of the core network through a newly defined interface.

In addition, the sensing service involved in embodiments of this application includes but is not limited to the following services:

Object feature detection: It derives information that can indicate an attribute or a state of a target object, which may be at least one of a position of the target object, a velocity of the target object, an acceleration of the target object, a material of the target object, a shape of the target object, a category of the target object, a radar cross section RCS (Radar Cross Section, RCS) of the target object, a polarization scattering characteristic, or the like.

Event detection: It derives information related to a target event, that is, information that can be detected/sensed when the target event occurs. The event detection may be fall detection, intrusion detection, quantity counting, indoor positioning, gesture recognition, lip language recognition, gait recognition, facial expression recognition, respiratory monitoring, heart rate monitoring, sound source resolution, and the like.

Environment detection: It derives a humidity, a brightness, a temperature, an atmospheric pressure, air quality, a weather condition, terrain and topography, a distribution of buildings/vegetation, population statistics, a crowd density, a vehicle density, and the like.

The sensing method of this application is described below with reference to specific preprocessing manners.
(I) When the preprocessing manner is interpolation or sample extraction, a specific interpolation manner includes at least one of the following manners.
   (1) Replication-based interpolation: It means directly using a first sensing measurement result corresponding to a resource location close to a target resource location as a second sensing measurement result corresponding to the target resource location.
   (2) Linear interpolation: It is a linear polynomial interpolation manner. A weight factor is determined based on distance between resource locations corresponding to two known sensing measurement results and a target resource location. In other words, a straight line connecting two known first sensing measurement results is used to determine an unknown second sensing measurement result. It is a widely used interpolation method.
   (3) Average interpolation: It means using an average of first sensing measurement results corresponding to at least two resource locations close to a target resource location as a second sensing measurement result.
   (4) Transform domain interpolation based on DFT/FFT or IDFT/IFFT: It means transforming a to-be-interpolated time-domain signal sampling sequence into a Doppler domain, inserting a zero value sequence into a middle of the Doppler domain sequence, and then transforming the newly constructed sequence back to a time domain to complete interpolation, or means transforming a to-be-interpolated frequency-domain signal sampling sequence to a delay domain, inserting a zero value sequence into an end of the delay-domain sequence, and then transforming the newly constructed sequence back to a frequency domain to complete interpolation.
   (5) Lagrange interpolation or Newton interpolation: It means constructing a Lagrange interpolation polynomial or a Newton interpolation polynomial, and obtaining a signal sampling value at a desired interpolation time or frequency through a polynomial operation.
   (6) Segmental interpolation (such as cubic spline interpolation): It means constructing an interpolation polynomial for each segment of a digital signal, and obtaining a signal sampling value at a desired interpolation time or frequency through a polynomial operation.
   (7) MMSE filtering/Wiener filtering interpolation: It means calculating an interpolation filtering coefficient based on relevant prior information such as a coherence bandwidth, a coherence time, and a signal-to-noise ratio for interpolation.
   (8) Shepard interpolation: It is inverse distance weighted data interpolation, where a weighted value of data is inversely proportional to a distance to an interpolation position.

The process of this application embodiment specifically includes the following:
(1) The base station transmits signals for sensing based on sensing requirements and/or configurations of the signals for sensing. The sensing requirements and/or the configurations of the signals for sensing may be from the network function device or the network element (for example, the sensing network function device/the sensing network element) of the core network.

The signals for sensing may be of a same type or different types, for example, at one of a sensing signal, a communication signal, and an integrated sensing and communication signal. The communication signals may be a same reference signal or different reference signals or data symbols. The reference signal is at least one of signals in Table 1:

**Table 1**

| NR downlink reference signal | NR uplink reference signal | NR sidelink (Sidelink) reference signal |
|---|---|---|
| PDSCH-DMRS | PUSCH-DMRS | PSSCH-DMRS |
| PDCCH-DMRS | PUCCH-DMRS | PSCCH-DMRS |
| PBCH-DMRS | PTRS | PSSCH-PTRS |
| PT-RS | SRS | PSBCH-DMRS |
| CSI-RS | | CSI-RS |
| RIM-RS | | |
| P-RS | | |

Time-domain resources and frequency-domain resources of the signals for sensing may be non-uniformly distributed, and corresponding transmitting and receiving antennas may be uniformly or sparsely distributed. Taking the time domain as an example, formats of two different types of signals for sensing are shown in FIG. 4.

(2) The base station transmits the above preprocessing indication information of the sensing measurement result to the UE, which is used for instructing the UE to determine whether interpolation preprocessing is required and an interpolation manner.

(3) Optionally, the base station transmits the above sensing indication information to the UE, and the UE determines the preprocessing indication information based on the sensing indication information, that is, determines whether interpolation or extraction preprocessing is required and an interpolation or extraction manner.

It should be noted that, steps 1), 2), and 3) have no precedence relationship.

(4) The UE calculates first sensing measurement results based on the received signals. Assuming that the received signals for sensing are shown in FIG. 4, a distribution of the first sensing measurement results in a time domain is shown in FIG. 5 (t2-t1=t*-t2=...=t7-t6, and except for moments t2 to t3, the signals corresponding to the remaining moments and corresponding calculated sensing measurement results are uniformly distributed in the time domain).

The first sensing measurement results corresponding to the different moments may be a frequency-domain channel response H, which is obtained through channel estimation, for example, least squares (LS) channel estimation (that is, H=Y./X, where Y is a frequency-domain form of the received signals for sensing, X is a frequency-domain form of local signals for sensing, and ./represents dot division, that is, element-by-element division) or minimum mean square error (MMSE) channel estimation, or may be an amplitude or an amplitude squared or a phase of the frequency-domain channel response H, or may be a characteristic of an I channel signal and/or a Q channel signal of the frequency-domain channel response, for example, an amplitude or an amplitude squared of the I channel and/or Q channel signal.

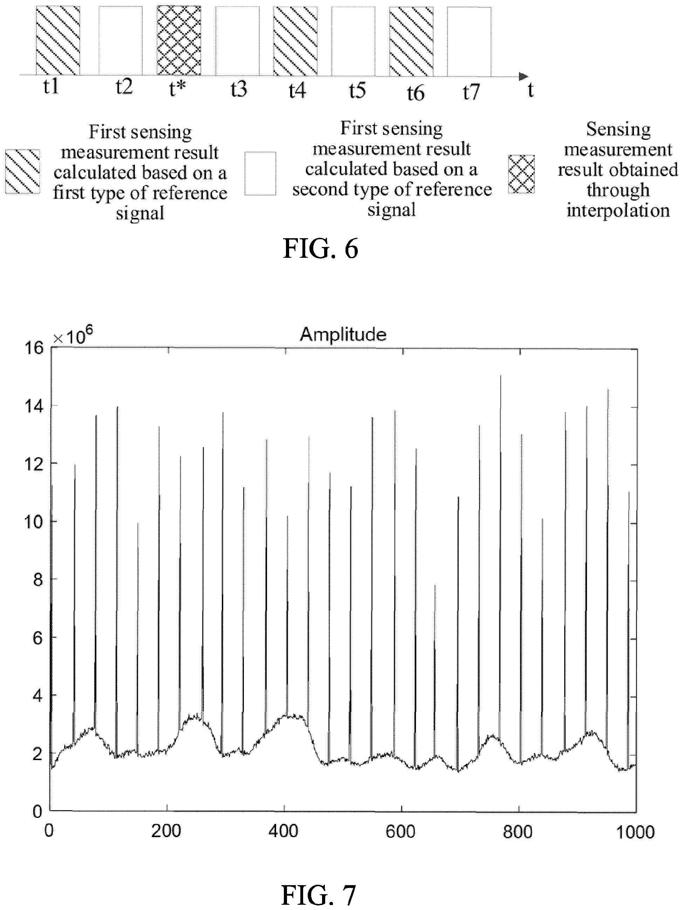

(5) The UE performs interpolation on the first sensing measurement results, as shown in FIG. 6. To be specific, in the preprocessing indication information of the sensing measurement results transmitted by the base station, interpolation needs to be performed on the first sensing measurement results at the moments t1 to t7 to obtain the sensing measurement result at the moment t*. Alternatively, the UE determines that the sensing measurement result at the moment t* needs to be obtained through interpolation based on the sensing indication information transmitted by the base station, to ensure uniformly sampling of the sensing measurement result in the time domain.

The sensing measurement result at the moment t* is obtained through interpolation of the sensing measurement results at the moments t1 to t7. The sensing measurement results at the moments t1 to t7 are the first sensing measurement result, and the sensing measurement results at the moments t1 to t7 and the moment t* are the second sensing measurement result.

The interpolation manner is selecting at least one sensing measurement result from the sensing measurement results corresponding to the moments t1 to t7, multiplying the at least one sensing measurement result by a specific weight coefficient, and adding up the at least one sensing measurement result as the sensing measurement result at the moment t*. A basis for selecting the sensing measurement result for interpolation may be a magnitude of a time interval to the moment t* and/or calculated sensing performance indicators corresponding to the sensing measurement results at the moments t1 to t7. For example, sensing measurement results X2 and X3 corresponding to adjacent moments t2 and time t3 are selected, and a sensing measurement result X* corresponding to the moment t * is obtained through linear interpolation. The above meets the following relational formula: (X*-X2)/(t*-t2)=(X3-X*)/(t3-t*). For example, sensing measurement results X2 and X4 corresponding to the adjacent moments t2 and t4 with optimal sensing performance indicators (or with sensing performance indicators exceeding a preset threshold) (although a time interval between the moment t2 and the moment t* is smaller, its sensing performance indicator does not exceed the threshold or is lower than the sensing performance indicator corresponding to the calculated sensing measurement result at the moment t4) are selected, and the sensing measurement results X* corresponding to the moment t* is obtained through linear interpolation. The above meets the following relational relationship: (X*-X2)/(t*-t2)=(X4-X*)/(t4-t*).

(6) Optionally, the UE extracts the sensing measurement results after interpolation or before interpolation. For example, in the preprocessing indication information of the sensing measurement results transmitted by the base station, the sensing measurement results at the moments t1, t*, t4, and t6 need to be extracted. Alternatively, the UE determines, based on the sensing indication information transmitted by the base station, a minimum time-domain sampling interval that needs to be met by the sensing measurement results required for calculating the final sensing result is t*-t1. In this case, only the sensing measurement results at the moments t1, t*, t4, and t6 (or the sensing measurement results at the moments t2, t3, t5, and t7) need to be reported.

(7) The UE reports the second sensing measurement result after interpolation and/or extraction to the base station.

(II) When the preprocessing manner is outlier removal, a specific process includes the following:
(1) The base station transmits signals for sensing based on sensing requirements and/or configurations of the signals for sensing. The sensing requirements and/or the configurations of the signals for sensing may be from the network function device or the network element (for example, the sensing network function device/the sensing network element) of the core network.

The signals for sensing may be of a same type or different types, for example, at one of a sensing signal, a communication signal, and an integrated sensing and communication signal. The communication signals may be a same reference signal or different reference signals or data symbols. The reference signal may be one of signals in Table 1.

(2) The base station transmits preprocessing indication information of the sensing measurement results to the UE, to instruct the UE to determine whether remove outliers and an outlier removal manner. The outlier removal manner includes algorithm selection and a window size for outlier removal, which is a quantity of samples used for an outlier removal-related calculation.

(3) Optionally, the base station transmits sensing indication information to the UE, and the UE determines the preprocessing information of the first sensing measurement results based on the sensing indication information, that is, whether outlier removal is required and an outlier removal manner.

It should be noted that, steps 1), 2), and 3) have no precedence relationship.

The outlier removal manner may include the following steps in case of a standard deviation method.

An outlier removal window is selected, and an average *x̅* of data within the window is calculated.

A standard deviation *σ* of the data within the window is calculated.

Samples within the window having a deviation from the average by more than n times the standard deviation, that is, |*x*-*x̅*|>*n*·*σ*, and x is replaced with a preceding sample, a succeeding sample, or the average, or is discarded.

(4) The UE calculates the first sensing measurement results based on the received signals. Assuming that the window size for outlier removal is 1000 sample points, a time-domain amplitude distribution of the first sensing measurement results within the window is shown in FIG. 7.

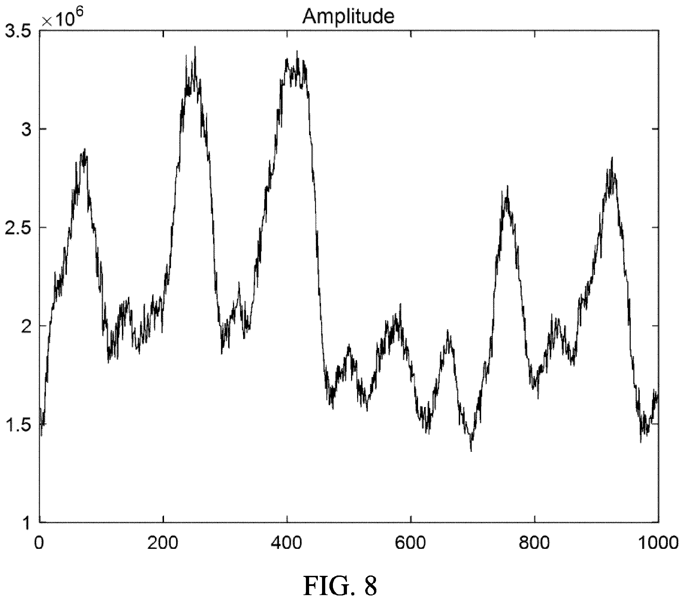

(5) The UE performs outlier removal on the first sensing measurement results within the outlier removal window (replaces outliers). A time-domain amplitude distribution of a second sensing measurement result is shown in FIG. 8.

(6) The UE reports the second sensing measurement results to the base station.

(III) When the preprocessing manner is filtering, the main process is the same as the above preprocessing manner of interpolation or sample extraction. In the preprocessing indication information transmitted by the base station to the UE, the UE is instructed to determine whether filtering is required and preprocessing parameter information associated with filtering. Optionally, The UE determines whether filtering is required and a filtering manner based on the sensing indication information.

The preprocessing parameter information associated with filtering may be:
a filtering response type, including low pass, high pass, bandpass, and bandstop;
a design method: an infinite impulse response (Infinite Impulse Response, IIR), including, for example, Butterworth, Chebyshev, and Elliptics; and a non-recursive type (Finite Impulse Response, FIR), including, for example, an equiripple, an interpolated FIR, and the like;
a filter order;
a frequency setting, including a sampling frequency, a passband frequency, a center frequency, a cutoff frequency, and the like;
an amplitude characteristic: a passband flatness, a stopband attenuation, and the like.

In this embodiment, a specific filter may be defined, and a specific filter coefficient may be defined. For example, in the preprocessing parameter information associated with filtering, a specific filter that is defined is a Savitzky-Golay filter, with a filter order of 41. The UE filters the first sensing measurement results based on an instruction to obtain the second sensing measurement result.

(IV) When the preprocessing manner is noise suppression, the main process is the same as the above preprocessing manner of interpolation or sample extraction. In the preprocessing indication information transmitted by the base station to the UE, the UE is instructed to determine whether noise suppression is required and preprocessing parameter information associated with noise suppression. Optionally, The UE determines whether noise suppression is required and a noise suppression manner based on the sensing indication information.

The preprocessing parameter information associated with noise suppression may be:
a noise suppression algorithm, which is selected based on a sensing service;
a target SNR threshold: an SNR of the second sensing measurement results after noise suppression needs to be higher than the target SNR threshold, where the SNR may be a ratio of a signal to a noise power or a ratio of a target signal component for sensing to another signal component for sensing; and
parameter information associated with the noise suppression algorithm. Taking DWT as an example, the parameter information associated with the noise suppression algorithm may be iterative decomposition times, filters that are used (such as a Daubechies wavelet filter), a wavelet basis functions, a desired noise suppression result, and the like.

The desired noise suppression result is the reported second sensing measurement result. For the DWT, original data may be decomposed into an approximate coefficient vector and a detail coefficient vector through L-step iterative decomposition by using DWT. The approximate coefficient vector represents a basic shape of an input signal with large-scale features, and the detail coefficient vector describes high-frequency noise with small-scale features and detail information. The desired noise suppression result (the second sensing measurement result) may be the approximate coefficient vector and/or the detail coefficient vector, or may be a result of a combination of the two based on a specific rule, for example, weighted summation.

(V) When the preprocessing manner is merging, the main process is the same as the above preprocessing manner of interpolation or sample extraction. In the preprocessing indication information transmitted by the base station to the UE, the UE is instructed to determine whether merging is required and preprocessing parameter information associated with merging. Optionally, The UE determines whether merging is required and a merging manner based on the sensing indication information.

The preprocessing parameter information associated with merging may be:
a merging method: direct summation, weighted summation (for example, averaging), quotient calculation (dot division), conjugate multiplication, difference calculation, correlation, convolution, and the like of a plurality of sampling values of the first sensing measurement results;
a quantity of and a requirement for first sensing measurement results to be merged (for example, corresponding sensing performance indicators need to exceed a preset threshold); and
a merging dimension, including at least one of frequency-domain merging, time-domain merging, antenna-domain merging, code-domain merging, delay-domain merging, Doppler-domain merging, and angle-domain merging.

For example, the indicated merging method is direct summation in the frequency domain. If the first device calculates sensing measurement results corresponding to a plurality of frequency-domain positions, the first device adds up the sensing measurement results of the plurality of frequency-domain positions as the second sensing measurement result.

For example, the indicated merging method is antenna domain quotient calculation (dot division, that is, element-by-element division). If the first device calculates frequency-domain channel responses corresponding to an antenna combination 1 (a transmitting antenna 1 and a receiving antenna 1) and an antenna combination 2 (a transmitting antenna 1 and a receiving antenna 2), the first device uses a quotient of the frequency-domain channel responses corresponding to the two antenna combinations as the second sensing measurement result.

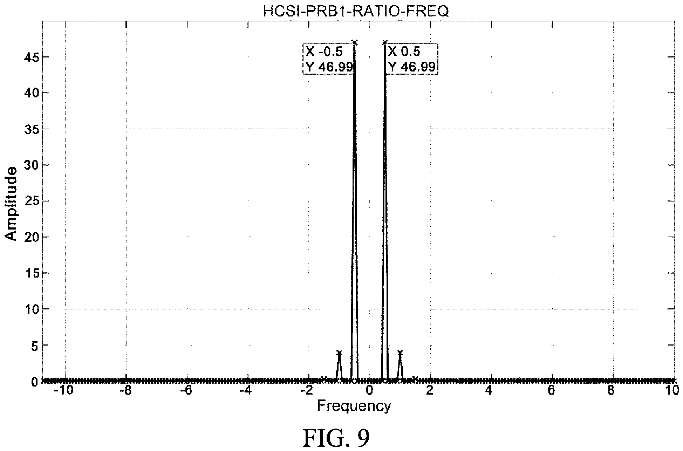

For example, the indicated merging manner is antenna-domain quotient calculation (merging 1) followed by frequency-domain weighted summation (merging 2). A weighting factor is a value related to a sensing performance indicator. Taking respiratory detection as an example, an obtained first sensing measurement result corresponding to each subcarrier after the antenna-domain quotient calculation (merging 1) is at least one of an amplitude and/or a phase of a frequency-domain channel responder H-ratio, an I channel amplitude and/or a Q channel amplitude of the H-ratio, a projection operation result of I channel and Q channel signals of the H-ratio (the projection operation may be I*cos(theta)+Q*sin(theta), where theta represents an angle value, different thetas correspond to different projections, I represents I channel data, and Q represents Q channel data), and a time-domain autocorrelation result corresponding to the above results. The sensing performance indicator is defined as a breath to noise ratio (Breath to Noise Ratio, BNR), which is calculated as follows: A ratio of a target sensing signal component to another sensing signal component obtained after an FFT operation of the first sensing measurement result within a specific time window is the sensing performance indicator. The target sensing component is an amplitude or an amplitude squared corresponding to at least one sample point of all or some sample points in the FFT result with a largest amplitude. It may be considered that the at least one sample point with the largest amplitude is a sample point corresponding to a respiratory rate, as shown by sample points X=-0.5 and X=0.5 in FIG. 9. Some sample points are determined based on an actual respiratory rate range, as shown by sample points in a box of FIG. 9. The another sensing signal component may be a sum of amplitudes and/or amplitudes squared corresponding to all sample points in the FFT result, an average or an average squared of amplitudes corresponding to all sample points, a sum of amplitudes and/or amplitudes squared corresponding to all sample points in the FFT result other than a sample point corresponding to a target sensing component, or an average or an average squared of the amplitudes corresponding to all of the sample points in the FFT result other than the sample point corresponding to the target sensing component. It is assumed that two subcarriers SC1 and SC2 exist, corresponding first sensing measurement results are respectively a first sensing measurement result 1 and a first sensing measurement result 2, and corresponding sensing performance indicators are respectively BNR1 and BNR2. The first sensing measurement result 1*BNR1+the first sensing measurement result 2*BNR2 is used as the second sensing measurement result, or the first sensing measurement result 1*BNR1/(BNR1+BNR2)+the first sensing measurement result 2*BNR2/(BNR1+BNR2) is used as the second sensing measurement result.

In this embodiment of this application, after the first sensing measurement result corresponding to the sensing measurement quantity is determined based on the received first signal, the first sensing measurement result is preprocessed, to obtain the second sensing measurement result that meets the corresponding requirement. For example, interpolation or sample extraction is performed on first sensing measurement results of a plurality of resources, so that the processed second sensing measurement result is a result obtained by uniformly sampling the first sensing measurement results of the corresponding resources. In this way, the second sensing measurement result can meet a reporting requirement of uniform sampling. For another example, the first sensing measurement results are merged or compressed, so that the second sensing measurement result can meet a reporting requirement of reducing reporting overheads.

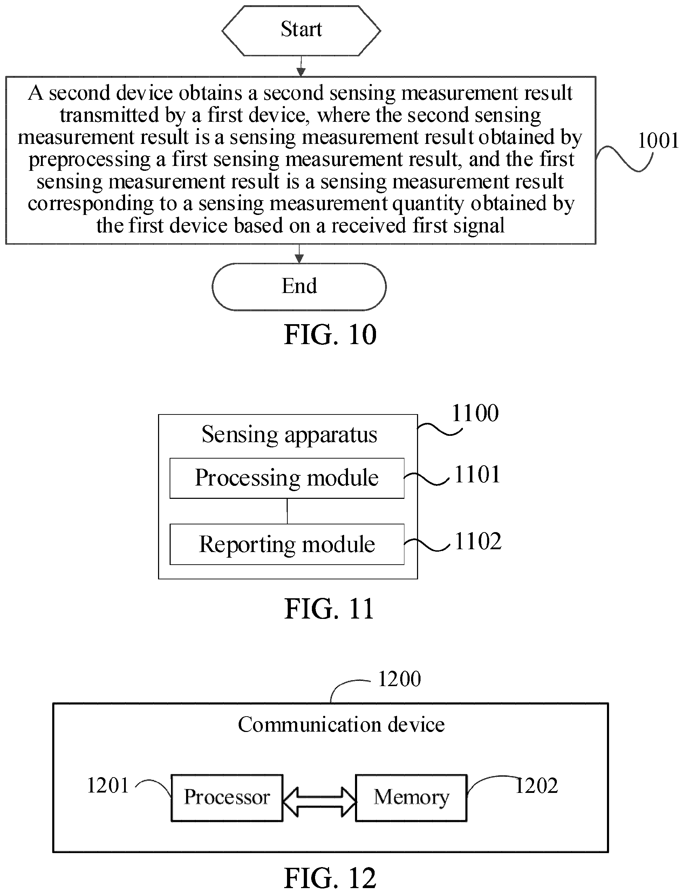

As shown in FIG. 10, an embodiment of this application provides a sensing method, including the following steps:
Step 1001: A second device obtains a second sensing measurement result transmitted by a first device, where the second sensing measurement result is a sensing measurement result obtained by preprocessing a first sensing measurement result, and the first sensing measurement result is a sensing measurement result corresponding to a sensing measurement quantity obtained by the first device based on a received first signal.

In this embodiment of this application, the second sensing measurement result obtained by the second device is a sensing measurement result obtained after preprocessing of the first sensing measurement result. For example, interpolation or sample extraction is performed on first sensing measurement results of a plurality of resources, so that the processed second sensing measurement result is a result obtained by uniformly sampling the first sensing measurement results of the corresponding resources. In this way, the second sensing measurement result can meet a reporting requirement of uniform sampling. For another example, the first sensing measurement results are merged or compressed, so that the second sensing measurement result can meet a reporting requirement of reducing reporting overheads. In this way, the second sensing measurement result that meets the corresponding requirement can be obtained by preprocessing the first sensing measurement result.

Optionally, before the second device obtains the second sensing measurement result transmitted by the first device, the method further includes:

The second device indicates preprocessing information of the first sensing measurement result.

Optionally, that the second device indicates preprocessing information of the first sensing measurement result includes:

The second device transmits at least one of preprocessing indication information and sensing indication information.

The preprocessing indication information indicates the preprocessing information, and the sensing indication information is associated with the preprocessing information.

Optionally, the preprocessing information includes at least one of:
whether to preprocess the first sensing measurement result;
condition information for enabling preprocessing;
information regarding a requirement on a first parameter corresponding to the first sensing measurement result;
information regarding a requirement on a first parameter corresponding to the second sensing measurement result;
a preprocessing manner; and
preprocessing parameter information associated with the preprocessing manner.

The first parameter includes at least one of information regarding a proportion of effective sample points and a sensing performance indicator.

Optionally, the preprocessing manner includes at least one of:
interpolation;
sample extraction;
clutter suppression;
noise suppression;
outlier removal;
filtering;
merging; and
compression.

Optionally, the sensing indication information includes at least one of
sensing requirement information;
a sensing measurement quantity;
information regarding an algorithm for obtaining a sensing result based on a sensing measurement; and
sensing performance indicator information.

Optionally, the method in this embodiment of this application further includes:
obtaining, by the second device, feedback information of the preprocessing information transmitted by the first device, where the feedback information includes first feedback information or second feedback information, the first feedback information is used for instructing the second device to re-indicate the preprocessing information, and the second feedback information is used for instructing the second device to reconfigure the first signal; and transmitting the reconfigured first signal or re-indicating the preprocessing information through preprocessing indication information based on the feedback information.

Optionally, that the second device indicates preprocessing information of the first sensing measurement result includes:
The second device obtains preprocessing capability information of the first device.

The second device indicates the preprocessing information of the first sensing measurement result based on the preprocessing capability information.

It should be noted that, the sensing method for the second device side corresponds to the method for the first device side. A specific interaction process between the second device and the first device has been described in detail in the above embodiment of the method for the first device side, and therefore is not described herein again.

An execution body of the sensing method provided in this embodiment of this application may be a sensing apparatus. In this embodiment of this application, that the sensing apparatus performs the sensing method is used as an example to describe the sensing apparatus provided in embodiments of this application.

As shown in FIG. 11, an embodiment of this application provides a sensing apparatus 1100, including:
a processing module 1101, configured preprocess a first sensing measurement result to obtain a second sensing measurement result, where the first sensing measurement result is a sensing measurement result corresponding to a sensing measurement quantity obtained by the first device based on a received first signal; and
a reporting module 1102, configured to report the second sensing measurement result to a second device.

Optionally, the processing module includes:
a first obtaining submodule, configured to obtain preprocessing information of the first sensing measurement result indicated by the second device; and
a first processing submodule, configured to preprocess the first sensing measurement result based on the preprocessing information.

Optionally, the first obtaining submodule is configured to obtain the preprocessing information based on target indication information transmitted by the second device.

The target indication information includes at least one of preprocessing indication information and sensing indication information. The preprocessing indication information indicates the preprocessing information, and the sensing indication information is associated with the preprocessing information.

Optionally, the preprocessing information includes at least one of:
whether to preprocess the first sensing measurement result;
condition information for enabling preprocessing;
information regarding a requirement on a first parameter corresponding to the first sensing measurement result;
information regarding a requirement on a first parameter corresponding to the second sensing measurement result;
a preprocessing manner; and
preprocessing parameter information associated with the preprocessing manner.

The first parameter includes at least one of information regarding a proportion of effective sample points and a sensing performance indicator.

Optionally, the preprocessing manner includes at least one of interpolation, sample extraction, clutter suppression, noise suppression, outlier removal, filtering, merging, and compression.
interpolation;
sample extraction;
clutter suppression;
noise suppression;
outlier removal;
filtering;
merging; and
compression.

Optionally, the preprocessing parameter information includes at least one of:
time-domain resource information, frequency-domain resource information, or spatial resource information corresponding to the second sensing measurement result;
an interpolation manner;
an interpolation density;
an interpolation quantity;
an extraction manner;
an extraction density;
an extraction quantity; and
a clutter suppression manner;
a window size for direct current removal;
information regarding an algorithm for noise suppression;
target signal-to-noise ratio SNR threshold information;
an outlier removal manner;
an outlier processing manner;
a window size for outlier removal;
a filtering manner;
a filtering parameter;
filter information;
a merging manner;
a quantity of first sensing measurement results to be merged;
information regarding a requirement on the first sensing measurement results to be merged;
a merging dimension;
a compression manner;
a compression ratio; and
data volume information after compression.

Optionally, the sensing indication information includes at least one of
sensing requirement information;
a sensing measurement quantity;
information regarding an algorithm for obtaining a sensing result based on a sensing measurement; and
sensing performance indicator information.

Optionally, the sensing measurement quantity includes at least one of
original channel information;
signal strength information;
spectral information;
multi-path information;
angle information;
information regarding differences between signals corresponding to different antennas; and
target parameter information determined based on the original channel information.

Optionally, the apparatus in this embodiment of this application further includes:
a feedback module, configured to: before the processing module preprocesses the first sensing measurement result based on the preprocessing information, transmit feedback information of the preprocessing information to the second device, where the feedback information includes first feedback information or second feedback information, the first feedback information is used for instructing the second device to re-indicate the preprocessing information, and the second feedback information is used for instructing the second device to reconfigure the first signal.

The processing module is configured to: preprocess, by the first device, the first sensing measurement result based on the preprocessing information re-indicated by the second device through preprocessing indication information in a case that the feedback information includes the first feedback information;
obtain, by the first device, the first sensing measurement result based on the first signal reconfigured by the second device in a case that the feedback information includes the second feedback information; and preprocess the first sensing measurement result based on the preprocessing information.

Optionally, the feedback module is configured to transmit the feedback information to the second device in a case that a target condition is met.

The target condition includes at least one of
the first device does not support the preprocessing manner indicated by the preprocessing information;
a first parameter corresponding to the second sensing measurement result does not meet requirement information indicated by the second device; and
a first parameter corresponding to the first sensing measurement result does not meet the requirement information indicated by the second device.

The first parameter includes at least one of information regarding a proportion of effective sample points and a sensing performance indicator.

Optionally, the apparatus in this embodiment of this application further includes:
a transmission module, configured to: before the first obtaining submodule obtains the preprocessing information of the first sensing measurement result indicated by the second device, transmit preprocessing capability information to the second device, where the preprocessing capability information indicates a preprocessing capability supported by the first device, and the preprocessing capability information is used for determining the preprocessing information.

Optionally, the first signal includes a signal of at least one of the following signal types:
a sensing signal;
a communication signal; and
an integrated sensing and communication signal.

In this embodiment of this application, after the first sensing measurement result corresponding to the sensing measurement quantity is determined based on the received first signal, the first sensing measurement result is preprocessed, to obtain the second sensing measurement result that meets the corresponding requirement. For example, interpolation or sample extraction is performed on first sensing measurement results of a plurality of resources, so that the processed second sensing measurement result is a result obtained by uniformly sampling the first sensing measurement results of the corresponding resources. In this way, the second sensing measurement result can meet a reporting requirement of uniform sampling. For another example, the first sensing measurement results are merged or compressed, so that the second sensing measurement result can meet a reporting requirement of reducing reporting overheads.

The sensing apparatus in this embodiment of this application may be an electronic device, such as an electronic device with an operating system, or may be a component in the electronic device, such as an integrated circuit or a chip. The electronic device may be a terminal or a device other than the terminal. For example, the terminal may include but is not limited to the types of the terminal 11 listed above, and the other devices may be servers, network attached storages (Network Attached Storage, NAS), or the like. This is not specifically limited in this embodiment of this application.

The sensing apparatus provided in this embodiment of this application can implement all processes implemented in the method embodiments of FIG. 2 to FIG. 10, and achieve the same technical effects. In order to avoid repetition, details are not described herein.

Optionally, as shown in FIG. 12, an embodiment of this application further provides a communication device 1200, including a processor 1201 and a memory 1202. The memory 1202 stores a program or instructions executable by the processor 1201. For example, when the communication device 1200 is a first device, the program or the instructions, when executed by the processor 1201, implement the steps of the method embodiment of the first device side, and can achieve the same technical effects. When the communication device 1200 is a second device, the program or the instructions, when executed by the processor 1201, implement the steps of the method embodiment of the second device side, and can achieve the same technical effects. To avoid repetition, details are not described herein.

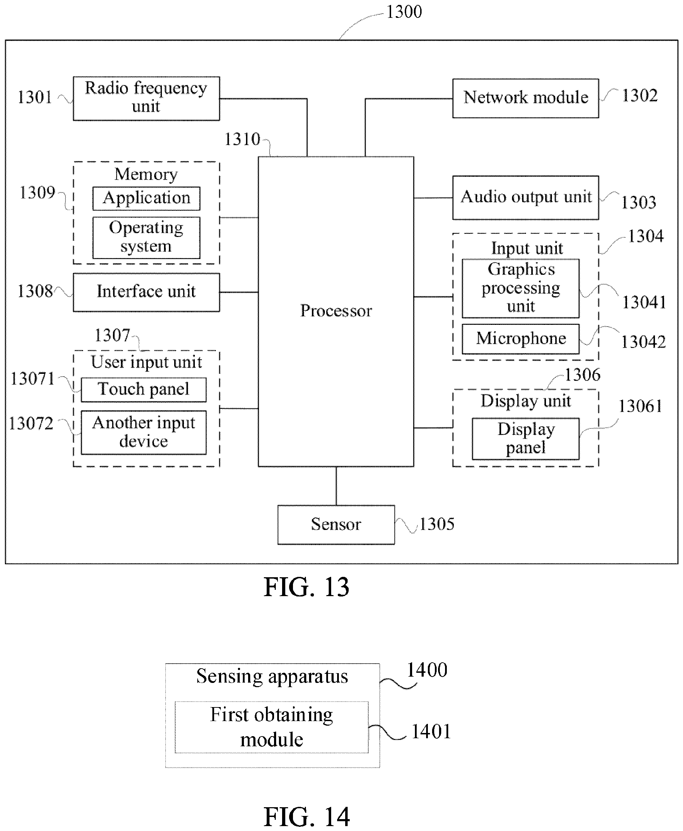

An embodiment of this application further provides a first device, including a processor and a communication interface. The processor is configured to preprocess a first sensing measurement result to obtain a second sensing measurement result. The first sensing measurement result is a sensing measurement result corresponding to a sensing measurement quantity obtained by the first device based on a received first signal. The communication interface is configured to report the second sensing measurement result to a second device. This embodiment corresponds to the above method embodiment of the first device side. The implementation processes and manners of the above method embodiment are applicable to this embodiment, and can achieve the same technical effects. Specifically, FIG. 13 is a schematic diagram of a hardware structure of a first device (which is specifically a terminal) for implementing an embodiment of this application.

The terminal 1300 includes but is not limited to at least some of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the terminal 1300 may further include a power supply (such as a battery) that supplies power to the components. The power supply may be logically connected to the processor 1310 through a power management system, thereby implementing functions such as management of charging, discharging, and power consumption through the power management system. The terminal structure shown in FIG. 13 constitutes no limitation on the terminal, and the terminal may include more or fewer components than those shown in the figure, or some merged components, or different component arrangements. Details are not described herein.

It should be noted that, in this embodiment of this application, the input unit 1304 may include a graphics processing unit (Graphics Processing Unit, GPU) 13041 and a microphone 13042. The graphics processing unit 13041 processes image data of a static picture or a video obtained by an image capture apparatus (for example, a camera) in a video capture mode or an image capture mode. The display unit 1306 may include a display panel 13061. The display panel 13061 may be configured in a form such as a liquid crystal display or an organic light-emitting diode. The user input unit 1307 includes at least one of a touch panel 13071 and another input device 13072. The touch panel 13071 is also referred to as a touch screen. The touch panel 13071 may include two parts: a touch detection apparatus and a touch controller. The another input device 13072 may include but is not limited to a physical keyboard, a function button (such as a volume control button or a power button), a trackball, a mouse, and a joystick. Details are not described herein.

In this embodiment of this application, the radio frequency unit 1301 receives downlink data from a network side device, and then may transmit the data to the processor 1310 for processing. In addition, the radio frequency unit 1301 may send uplink data to the network side device. Generally, the radio frequency unit 1301 includes but is not limited to an antenna, an amplifier, a transceiver, a coupler, a low noise amplifier, and a duplexer.

The memory 1309 may be configured to store software programs or instructions as well as various data. The memory 1309 may mainly include a first storage area for storing programs or instructions and a second storage area for storing data. The first storage area may store an operating system, an application or an instruction required for at least one function (such as a sound playback function or an image playback function), and the like. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The non-volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, RAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1309 in this embodiment of this application includes but is not limited to the above and any other suitable types of memories.

The processor 1310 may include one or more processing units. Optionally, an application processor and a modem processor may be integrated into the processor 1310. The application processor mainly processes an operating system, a user interface, an application, and the like. The modem processor mainly processes wireless communication signals, for example, may be baseband processor. It may be understood that, the modem processor may alternatively not be integrated into the processor 1310.

The processor 1310 is configured to preprocess a first sensing measurement result to obtain a second sensing measurement result, where the first sensing measurement result is a sensing measurement result corresponding to a sensing measurement quantity obtained by the first device based on a received first signal.

The radio frequency unit 1301 is configured to report the second sensing measurement result to a second device.

In this embodiment of this application, after the first sensing measurement result corresponding to the sensing measurement quantity is determined based on the received first signal, the first sensing measurement result is preprocessed, to obtain the second sensing measurement result that meets the corresponding requirement. For example, interpolation or sample extraction is performed on first sensing measurement results of a plurality of resources, so that the processed second sensing measurement result is a result obtained by uniformly sampling the first sensing measurement results of the corresponding resources. In this way, the second sensing measurement result can meet a reporting requirement of uniform sampling. For another example, the first sensing measurement results are merged or compressed, so that the second sensing measurement result can meet a reporting requirement of reducing reporting overheads.

Optionally, the processor 1310 is configured to: obtain, by the first device, preprocessing information of the first sensing measurement result indicated by the second device; and preprocess the first sensing measurement result based on the preprocessing information.

Optionally, the processor 1310 is configured to: obtain, by the first device, the preprocessing information based on target indication information transmitted by the second device.

The target indication information includes at least one of preprocessing indication information and sensing indication information. The preprocessing indication information indicates the preprocessing information, and the sensing indication information is associated with the preprocessing information.

Optionally, the preprocessing information includes at least one of:
whether to preprocess the first sensing measurement result;
condition information for enabling preprocessing;
information regarding a requirement on a first parameter corresponding to the first sensing measurement result;
information regarding a requirement on a first parameter corresponding to the second sensing measurement result;
a preprocessing manner; and
preprocessing parameter information associated with the preprocessing manner.

The first parameter includes at least one of information regarding a proportion of effective sample points and a sensing performance indicator.

Optionally, the preprocessing manner includes at least one of:
interpolation;
sample extraction;
clutter suppression;
noise suppression;
outlier removal;
filtering;
merging; and
compression.

Optionally, the preprocessing parameter information includes at least one of:
time-domain resource information, frequency-domain resource information, or spatial resource information corresponding to the second sensing measurement result;
an interpolation manner;
an interpolation density;
an interpolation quantity; and
an extraction manner;
an extraction density;
an extraction quantity;
a clutter suppression manner;
a window size for direct current removal;
information regarding an algorithm for noise suppression;
target signal-to-noise ratio SNR threshold information;
an outlier removal manner;
an outlier processing manner;
a window size for outlier removal;
a filtering manner;
a filtering parameter;
filter information;
a merging manner;
a quantity of first sensing measurement results to be merged;
information regarding a requirement on the first sensing measurement results to be merged;
a merging dimension;
a compression manner;
a compression ratio; and
data volume information after compression.

Optionally, the sensing indication information includes at least one of
sensing requirement information;
a sensing measurement quantity;
information regarding an algorithm for obtaining a sensing result based on a sensing measurement; and
sensing performance indicator information.

Optionally, the sensing measurement quantity includes at least one of
original channel information;
signal strength information;
spectral information;
multi-path information;
angle information;
information regarding differences between signals corresponding to different antennas; and
target parameter information determined based on the original channel information.

Optionally, the radio frequency unit 1301 is configured to transmit feedback information of the preprocessing information to the second device, where the feedback information includes first feedback information or second feedback information, the first feedback information is used for instructing the second device to re-indicate the preprocessing information, and the second feedback information is used for instructing the second device to reconfigure the first signal.

The processor 1310 is configured to: preprocess the first sensing measurement result based on the preprocessing information re-indicated by the second device through preprocessing indication information in a case that the feedback information includes the first feedback information;
obtain the first sensing measurement result based on the first signal reconfigured by the second device in a case that the feedback information includes the second feedback information; and preprocess the first sensing measurement result based on the preprocessing information.

Optionally, the radio frequency unit 1301 is configured to transmit, by the first device, the feedback information to the second device in a case that a target condition is met.

The target condition includes at least one of
the first device does not support the preprocessing manner indicated by the preprocessing information;
a first parameter corresponding to the second sensing measurement result does not meet requirement information indicated by the second device; and
a first parameter corresponding to the first sensing measurement result does not meet the requirement information indicated by the second device.

The first parameter includes at least one of information regarding a proportion of effective sample points and a sensing performance indicator.

Optionally, the radio frequency unit 1301 is configured to transmit preprocessing capability information to the second device, where the preprocessing capability information indicates a preprocessing capability supported by the first device, and the preprocessing capability information is used for determining the preprocessing information.

Optionally, the first signal includes a signal of at least one of the following signal types:
a sensing signal;
a communication signal; and
an integrated sensing and communication signal.

In this embodiment of this application, after the first sensing measurement result corresponding to the sensing measurement quantity is determined based on the received first signal, the first sensing measurement result is preprocessed, to obtain the second sensing measurement result that meets the corresponding requirement. For example, interpolation or sample extraction is performed on first sensing measurement results of a plurality of resources, so that the processed second sensing measurement result is a result obtained by uniformly sampling the first sensing measurement results of the corresponding resources. In this way, the second sensing measurement result can meet a reporting requirement of uniform sampling. For another example, the first sensing measurement results are merged or compressed, so that the second sensing measurement result can meet a reporting requirement of reducing reporting overheads.

As shown in FIG. 14, an embodiment of this application further provides a sensing apparatus 1400, including:
a first obtaining module 1401, configured to obtain a second sensing measurement result transmitted by a first device, where the second sensing measurement result is a sensing measurement result obtained by preprocessing a first sensing measurement result, and the first sensing measurement result is a sensing measurement result corresponding to a sensing measurement quantity obtained by the first device based on a received first signal.

Optionally, the apparatus in this embodiment of this application further includes:
an indication module, configured to: before the first obtaining module obtains the second sensing measurement result sent by the first device, indicate preprocessing information of the first sensing measurement result.

Optionally, the indication module is configured to transmit at least one of preprocessing indication information and sensing indication information.

The preprocessing indication information indicates the preprocessing information, and the sensing indication information is associated with the preprocessing information.

Optionally, the preprocessing information includes at least one of:
whether to preprocess the first sensing measurement result;
condition information for enabling preprocessing;
information regarding a requirement on a first parameter corresponding to the first sensing measurement result;
information regarding a requirement on a first parameter corresponding to the second sensing measurement result;
a preprocessing manner; and
preprocessing parameter information associated with the preprocessing manner.

The first parameter includes at least one of information regarding a proportion of effective sample points and a sensing performance indicator.

Optionally, the preprocessing manner includes at least one of:
interpolation;
sample extraction;
clutter suppression;
noise suppression;
outlier removal;
filtering;
merging; and
compression.

Optionally, the sensing indication information includes at least one of
sensing requirement information;
a sensing measurement quantity;
information regarding an algorithm for obtaining a sensing result based on a sensing measurement; and
sensing performance indicator information.

Optionally, the apparatus in this embodiment of this application further includes:
a second obtaining module, configured to: obtain feedback information of the preprocessing information transmitted by the first device, where the feedback information includes first feedback information or second feedback information, the first feedback information is used for instructing the second device to re-indicate the preprocessing information, and the second feedback information is used for instructing the second device to reconfigure the first signal; and transmit the reconfigured first signal or re-indicate the preprocessing information through preprocessing indication information based on the feedback information.

Optionally, the indication module includes:
a second obtaining submodule, configured to obtain preprocessing capability information of the first device; and
an indication submodule, configured to indicate the preprocessing information of the first sensing measurement result based on the preprocessing capability information.

In this embodiment of this application, the obtained second sensing measurement result is a sensing measurement result obtained after preprocessing of the first sensing measurement result. For example, interpolation or sample extraction is performed on first sensing measurement results of a plurality of resources, so that the processed second sensing measurement result is a result obtained by uniformly sampling the first sensing measurement results of the corresponding resources. In this way, the second sensing measurement result can meet a reporting requirement of uniform sampling. For another example, the first sensing measurement results are merged or compressed, so that the second sensing measurement result can meet a reporting requirement of reducing reporting overheads. In this way, the second sensing measurement result that meets the corresponding requirement can be obtained by preprocessing the first sensing measurement result.

An embodiment of this application further provides a second device, including a processor and a communication interface. The communication interface is configured to obtain a second sensing measurement result transmitted by a first device. The second sensing measurement result is a sensing measurement result obtained by preprocessing a first sensing measurement result. The first sensing measurement result is a sensing measurement result corresponding to a sensing measurement quantity obtained by the first device based on a received first signal. The embodiment of the second device corresponds to the above method embodiment of the second device side. The implementation processes and manners of the above method embodiment are applicable to the embodiment of the second device, and can achieve the same technical effects.

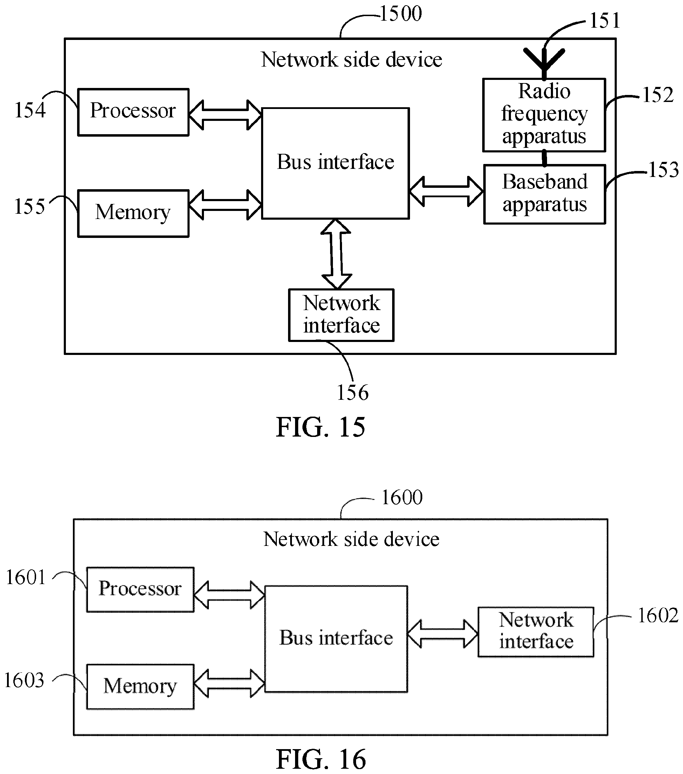

Specifically, an embodiment of this application further provides a network side device (which may be specifically a first device or a second device). As shown in FIG. 15, the network side device 1500 includes an antenna 151, a radio frequency apparatus 152, a baseband apparatus 153, a processor 154, and a memory 155. The antenna 151 is connected to the radio frequency apparatus 152. In an uplink direction, the radio frequency apparatus 152 receives information through the antenna 151 and transmits the received information to the baseband apparatus 153 for processing. In a downlink direction, the baseband apparatus 153 processes to-be-transmitted information and transmits the to-be-transmitted information to the radio frequency apparatus 152. The radio frequency apparatus 152 processes the received information and then transmits the information through the antenna 151.

The method in the above embodiment performed by the network side device may be implemented by the baseband apparatus 153. The baseband apparatus 153 includes a baseband processor.

The baseband apparatus 153 may include, for example, at least one baseband board. A plurality of chips are arranged on the baseband board, as shown in FIG. 15. One of the chips is, for example, a baseband processor, and is connected to the memory 155 through a bus interface to call a program in the memory 155 to perform the operations of the network device shown in the above method embodiment.

The network side device may further include a network interface 156, which is, for example, a common public radio interface (common public radio interface, CPRI).

Specifically, the network side device 1500 in this embodiment of this application further includes instructions or a program stored in the memory 155 and executable by the processor 154. The processor 154 calls the instructions or the program in the memory 155 to perform the method performed by each module shown in FIG. 11 or FIG. 14, and achieves the same technical effects. To avoid repetition, details are not described herein.

Specifically, an embodiment of this application further provides a network side device (which may be specifically a second device). As shown in FIG. 16, the network side device 1600 includes a processor 1601, a network interface 1602, and a memory 1603. The network interface 1602 is, for example, a CPRI.

Specifically, the network side device 1600 in this embodiment of this application further includes instructions or a program stored in the memory 1603 and executable by the processor 1601. The processor 1601 calls the instructions or the program in the memory 1603 to perform the method performed by each module shown in FIG. 14, and achieves the same technical effects. To avoid repetition, details are not described herein.

An embodiment of this application further provides a readable storage medium. The readable storage medium stores a program or instructions. When the program or instructions are executed by a processor, the processes of the embodiment of the foregoing sensing method are implemented, and the same technical effects can be achieved. To avoid repetition, details are not described herein.

The processor is a processor in the terminal described in the above embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to execute a program or instructions to implement the processes of the embodiment of the above sensing method, and can achieve the same technical effects. To avoid repetition, details are not described herein.

It should be understood that, the chip in this embodiment of this application may also be referred to as a system level chip, a system chip, a chip system, a system on chip, or the like.

An embodiment of this application further provides a computer program product stored in a storage medium. The computer program product is executed by at least one processor to implement the steps of the embodiment of the above sensing method or information transmission method, and the same technical effects can be achieved. To avoid repetition, details are not described herein.

An embodiment of this application further provides a sensing system, including a first device and a second device. The first device may be configured to perform the steps of the sensing method for the first device side. The second device may be configured to perform the steps of the sensing method for the second device side.

It should be noted that, a term "comprise", "include", or any other variant herein is intended to encompass non-exclusive inclusion, so that a process, a method, an article or an apparatus including a series of elements not only includes those elements, but also includes another element not listed explicitly or includes intrinsic elements for the process, the method, the article, or the apparatus. Without any further limitation, an element defined by the phrase "include one..." does not exclude existence of other same elements in the process, the method, the article, or the apparatus that includes the elements. In addition, it should be noted that the scope of the method and the apparatus in the embodiments of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the above implementations, a person skilled in the art may clearly learn that the method in the above embodiments may be implemented by software using a necessary universal hardware platform, or may be implemented by hardware. However, in most cases, software using a general hardware platform is an example implementation. Based on such an understanding, the technical solution of this application, in essence, or a part contributing to the related art may be embodied in a form of a computer software product. The software product is stored in a storage medium (such as a ROM/RAM, a disk, or a compact disc), including instructions for causing a terminal (such as a mobile phone, a computer, a server, or a network device) to perform the method in the embodiments of this application.

Although embodiments of this application are described above with reference to the drawings, this application is not limited to the specific embodiments described above. The above specific embodiments are illustrative but not restrictive. With the enlightenment of this application, a person of ordinary skill in the art may make many forms without departing from the concept of this application and the protection scope of the claims. These forms fall within the protection of this application.

## Claims

1. A sensing method, comprising:
preprocessing, by a first device, a first sensing measurement result to obtain a second sensing measurement result, wherein the first sensing measurement result is a sensing measurement result corresponding to a sensing measurement quantity obtained by the first device based on a received first signal; and
reporting, by the first device, the second sensing measurement result to a second device.

2. The method according to claim 1, wherein the preprocessing, by a first device, a first sensing measurement result comprises:
obtaining, by the first device, preprocessing information of the first sensing measurement result indicated by the second device; and
preprocessing, by the first device, the first sensing measurement result based on the preprocessing information.

3. The method according to claim 2, wherein the obtaining, by the first device, preprocessing information of the first sensing measurement result indicated by the second device comprises:
obtaining, by the first device, the preprocessing information based on target indication information transmitted by the second device, wherein
the target indication information comprises at least one of preprocessing indication information and sensing indication information, the preprocessing indication information indicates the preprocessing information, and the sensing indication information is associated with the preprocessing information.

4. The method according to claim 2 or 3, wherein the preprocessing information comprises at least one of:
whether to preprocess the first sensing measurement result;
condition information for enabling preprocessing;
information regarding a requirement on a first parameter corresponding to the first sensing measurement result;
information regarding a requirement on a first parameter corresponding to the second sensing measurement result;
a preprocessing manner; and
preprocessing parameter information associated with the preprocessing manner, wherein
the first parameter comprises at least one of information regarding a proportion of effective sample points and a sensing performance indicator.

5. The method according to claim 4, wherein the preprocessing manner comprises at least one of
interpolation;
sample extraction;
clutter suppression;
noise suppression;
outlier removal;
filtering;
merging; and
compression.

6. The method according to claim 4, wherein the preprocessing parameter information comprises at least one of:
time-domain resource information, frequency-domain resource information, or spatial resource information corresponding to the second sensing measurement result;
an interpolation manner;
an interpolation density;
an interpolation quantity;
an extraction manner;
an extraction density;
an extraction quantity;
a clutter suppression manner;
a window size for direct current removal;
information regarding an algorithm for noise suppression;
target signal-to-noise ratio SNR threshold information;
an outlier removal manner;
an outlier processing manner;
a window size for outlier removal;
a filtering manner;
a filtering parameter;
filter information;
a merging manner;
a quantity of first sensing measurement results to be merged;
information regarding a requirement on the first sensing measurement results to be merged;
a merging dimension;
a compression manner;
a compression ratio; and
data volume information after compression.

7. The method according to claim 3, wherein the sensing indication information comprises at least one of:
sensing requirement information;
a sensing measurement quantity;
information regarding an algorithm for obtaining a sensing result based on a sensing measurement; and
sensing performance indicator information.

8. The method according to any one of claims 1 to 7, wherein the sensing measurement quantity comprises at least one of
original channel information;
signal strength information;
spectral information;
multi-path information;
angle information;
information regarding differences between signals corresponding to different antennas; and
target parameter information determined based on the original channel information.

9. The method according to claim 2, wherein before the preprocessing, by the first device, the first sensing measurement result based on the preprocessing information, the method further comprises:
transmitting, by the first device, feedback information of the preprocessing information to the second device, wherein the feedback information comprises first feedback information or second feedback information, the first feedback information is used for instructing the second device to re-indicate the preprocessing information, and the second feedback information is used for instructing the second device to reconfigure the first signal; and
the preprocessing, by the first device, the first sensing measurement result based on the preprocessing information comprises:
preprocessing, by the first device, the first sensing measurement result based on the preprocessing information re-indicated by the second device through preprocessing indication information in a case that the feedback information comprises the first feedback information;
obtaining, by the first device, the first sensing measurement result based on the first signal reconfigured by the second device in a case that the feedback information comprises the second feedback information; and preprocessing the first sensing measurement result based on the preprocessing information.

10. The method according to claim 9, wherein the transmitting, by the first device, feedback information of the preprocessing information to the second device comprises:
transmitting, by the first device, the feedback information to the second device in a case that a target condition is met, wherein
the target condition comprises at least one of:
the first device does not support the preprocessing manner indicated by the preprocessing information;
a first parameter corresponding to the second sensing measurement result does not meet requirement information indicated by the second device; and
a first parameter corresponding to the first sensing measurement result does not meet the requirement information indicated by the second device, wherein
the first parameter comprises at least one of information regarding a proportion of effective sample points and a sensing performance indicator.

11. The method according to claim 2, wherein before the obtaining, by the first device, preprocessing information of the first sensing measurement result indicated by the second device, the method further comprises:
transmitting, by the first device, preprocessing capability information to the second device, wherein the preprocessing capability information indicates a preprocessing capability supported by the first device, and the preprocessing capability information is used for determining the preprocessing information.

12. The method according to any one of claims 1 to 11, wherein the first signal comprises a signal of at least one of the following signal types:
a sensing signal;
a communication signal; and
an integrated sensing and communication signal.

13. A sensing method, comprising:
obtaining, by a second device, a second sensing measurement result transmitted by a first device, wherein the second sensing measurement result is a sensing measurement result obtained by preprocessing a first sensing measurement result, and the first sensing measurement result is a sensing measurement result corresponding to a sensing measurement quantity obtained by the first device based on a received first signal.

14. The method according to claim 13, wherein before the obtaining, by a second device, a second sensing measurement result transmitted by a first device, the method further comprises:
indicating, by the second device, preprocessing information of the first sensing measurement result.

15. The method according to claim 14, wherein the indicating, by the second device, preprocessing information of the first sensing measurement result comprises:
transmitting, by the second device, at least one of preprocessing indication information and sensing indication information, wherein
the preprocessing indication information indicates the preprocessing information, and the sensing indication information is associated with the preprocessing information.

16. The method according to claim 15, wherein the preprocessing information comprises at least one of:
whether to preprocess the first sensing measurement result;
condition information for enabling preprocessing;
information regarding a requirement on a first parameter corresponding to the first sensing measurement result;
information regarding a requirement on a first parameter corresponding to the second sensing measurement result;
a preprocessing manner; and
preprocessing parameter information associated with the preprocessing manner, wherein
the first parameter comprises at least one of information regarding a proportion of effective sample points and a sensing performance indicator.

17. The method according to claim 16, wherein the preprocessing manner comprises at least one of
interpolation;
sample extraction;
clutter suppression;
noise suppression;
outlier removal;
filtering;
merging; and
compression.

18. The method according to claim 15, wherein the sensing indication information comprises at least one of:
sensing requirement information;
a sensing measurement quantity;
information regarding an algorithm for obtaining a sensing result based on a sensing measurement; and
sensing performance indicator information.

19. The method according to claim 14, further comprising:
obtaining, by the second device, feedback information of the preprocessing information transmitted by the first device, wherein the feedback information comprises first feedback information or second feedback information, the first feedback information is used for instructing the second device to re-indicate the preprocessing information, and the second feedback information is used for instructing the second device to reconfigure the first signal; and
transmitting the reconfigured first signal or re-indicating the preprocessing information through preprocessing indication information based on the feedback information.

20. The method according to claim 14, wherein the indicating, by the second device, preprocessing information of the first sensing measurement result comprises:
obtaining, by the second device, preprocessing capability information of the first device; and
indicating, by the second device, the preprocessing information of the first sensing measurement result based on the preprocessing capability information.

21. A sensing apparatus, comprising:
a processing module, configured preprocess a first sensing measurement result to obtain a second sensing measurement result, wherein the first sensing measurement result is a sensing measurement result corresponding to a sensing measurement quantity obtained by the first device based on a received first signal; and
a reporting module, configured to report the second sensing measurement result to a second device.

22. A sensing apparatus, comprising:
a first obtaining module, configured to obtain a second sensing measurement result transmitted by a first device, wherein the second sensing measurement result is a sensing measurement result obtained by preprocessing a first sensing measurement result, and the first sensing measurement result is a sensing measurement result corresponding to a sensing measurement quantity obtained by the first device based on a received first signal.

23. A communication device, comprising a processor and a memory, wherein the memory stores a program or instructions executable by the processor, and the program or the instructions, when executed by the processor, implement the steps of the sensing method according to any one of claims 1 to 12, or implement the steps of the sensing method according to any one of claims 13 to 20.

24. A readable storage medium, storing a program or instructions, wherein the program or the instructions, when executed by a processor, implement the steps of the sensing method according to any one of claims 1 to 12, or implement the steps of the sensing method according to any one of claims 13 to 20.
